# EUROPEAN PATENT APPLICATION

(11) **EP 4 807 359 A1**
(43) Date of publication of application: **16.09.2026**
(21) Application number: 26162682.4
(22) Date of filing: 05.03.2026
(51) Int. Cl.: G01N 29/04, G01N 29/34, G01N 29/44, G01N 29/27

(54) **SYSTEM FOR AND METHOD OF INSPECTING SEMICONDUCTOR DEVICES, AND METHOD OF MANUFACTURING THE DEVICES INCLUDING THE METHOD**

(30) Priority: 10.03.2025 KR 20250030734
(71) Applicant: Samsung Electronics Co., Ltd., Suwon-si, Gyeonggi-do 16677 (KR); Nederlandse Organisatie voor toegepast- natuurwetenschappelijk onderzoek TNO, 2595 DA 's-Gravenhage (NL)
(72) Inventor: RYU, Sungyoon, 16677 Suwon-si (KR); QUESSON, Benoit André Jacques, 2595 DA The Hague (NL); NEER, Paul Louis Maria Joseph van, 2595 DA The Hague (NL); PIRAS, Daniele, 2595 DA The Hague (NL); FILLINGER, Laurent, 2595 DA The Hague (NL); KWAK, Hyunsoo, 16677 Suwon-si (KR); KWON, Soonyang, 16677 Suwon-si (KR); SOHN, Younghoon, 16677 Suwon-si (KR); SINN, Soobin, 16677 Suwon-si (KR); LEE, Soonsung, 16677 Suwon-si (KR); LEE, Eunjoo, 16677 Suwon-si (KR); IM, Ku, 16677 Suwon-si (KR); JEONG, Hyeongjun, 16677 Suwon-si (KR)
(74) Representative: Marks & Clerk LLP

(57) **Abstract**

Provided is a method of inspecting semiconductor devices, the method including selecting a type of a target structure and a type of a target defect to be inspected, selecting a filter based on the target structure and the target defect, performing an ultrasonic signal simulation based on the target structure, selecting, based on the ultrasonic signal simulation, a type of a probe configured to generate an ultrasonic signal by applying a vibration to the semiconductor device, setting a frequency of the vibration based on the ultrasonic signal simulation, generating the ultrasonic signal by applying, using the tip, the vibration to the semiconductor device, measuring the ultrasonic signal, processing the measured ultrasonic signal using the selected filter, performing a fitting for each of a signal generated by the ultrasonic signal simulation and the measured ultrasonic signal processed by the selected filter, and determining an accuracy of the fitting.

## Description

### BACKGROUND

The disclosure relates to a system and method of inspecting semiconductor devices, and a method of manufacturing the semiconductor devices by using the method. More specifically, the disclosure relates to a method of inspecting a high aspect ratio contact (HARC) structure in semiconductor devices by using a physically vibrating transducer.

As the integration density of semiconductor devices increases, vertical or three-dimensional (3D) semiconductor devices are being investigated as an alternative to conventional planar semiconductor devices. A semiconductor device having a vertical structure may include a structure extending vertically on a substrate. However, as the integration density of semiconductor devices increases, the number of layers stacked in a vertical direction may also increase, and accordingly, a precise method of inspecting semiconductor devices is required.

### SUMMARY

The disclosure may provide a system for inspecting semiconductor devices with improved reliability.

The disclosure provides a method of inspecting semiconductor devices with improved reliability.

The disclosure provides a method of manufacturing semiconductor devices with improved reliability.

However, the disclosure is not limited to the problems mentioned above, and other problems may be clearly understood by those skilled in the art based on the description below.

One or more embodiments of the disclosure, may provide a method of inspecting semiconductor devices, the method including: selecting a type of a target structure and a type of a target defect based on a semiconductor device including at least one layer, selecting a filter based on the target structure and the target defect, performing an ultrasonic signal simulation based on the target structure, selecting, based on the ultrasonic signal simulation, a type of probe configured to generate an ultrasonic signal by applying a vibration to the semiconductor device, setting a frequency of the vibration based on the ultrasonic signal simulation, generating the ultrasonic signal by applying, using the tip, the vibration to the semiconductor device, measuring the ultrasonic signal, processing the measured ultrasonic signal using the selected filter, performing a fitting for each of a signal generated by the ultrasonic signal simulation and the measured ultrasonic signal processed by the selected filter, and determining an accuracy of the fitting.

One or more embodiments of the disclosure, may provide a method of inspecting semiconductor devices, the method including: selecting, based on a semiconductor device, a type of a target structure and a type of a target defect to be inspected, selecting a filter based on the target structure and the target defect, performing an ultrasonic signal simulation based on the target structure, selecting, based on the ultrasonic signal simulation, a type of a probe configured to generate an ultrasonic signal by applying a vibration to the semiconductor device, setting a frequency of the vibration based on the ultrasonic signal simulation, generating the ultrasonic signal by applying, using the tip, the vibration to the semiconductor device, measuring the ultrasonic signal, processing the measured ultrasonic signal using the selected filter, performing a fitting for each of a signal generated by the ultrasonic signal simulation and the processed measured ultrasonic signal, determining an accuracy of the fitting, wherein, when the determined accuracy does not satisfy a reference value, the method may further include: repeating, based on a reference tool including a different filter and a different ultrasonic signal simulation, the performing the fitting and the determining the accuracy of the fitting, wherein, when the determined accuracy satisfies the reference value, the method may further include: quantifying one or more measurement values for the target structure and/or the target defect, wherein the measuring the ultrasonic signal may further include: measuring a signal based on a vertical stack of the semiconductor device measuring a reference signal, and measuring a target structure of the semiconductor device.

One or more embodiments of the disclosure, may provide a method of manufacturing a semiconductor device, the method including: preparing a wafer, performing a semiconductor process on the wafer, performing a shape profile inspection on the wafer subjected to the semiconductor process, and performing a subsequent semiconductor process, wherein the performing the shape profile inspection includes: selecting respective types of a target structure and a target defect to be inspected, selecting a filter based on the target structure and the target defect, performing an ultrasonic signal simulation based on the target structure, selecting, based on the ultrasonic signal simulation, a type of a probe configured to generate an ultrasonic signal by applying a vibration to the semiconductor device, setting a frequency of the vibration based on the ultrasonic signal simulation, generating the ultrasonic signal by applying, using the tip, the vibration to the semiconductor device, measuring the ultrasonic signal, processing the measured ultrasonic signal using the selected filter, performing a fitting for each of a signal generated by the ultrasonic signal simulation and the processed measured ultrasonic signal, determining an accuracy of the fitting, wherein, when the determined accuracy does not satisfy a reference value, the performing the shape profile inspection may further include: repeating, based on a reference tool including a different filter and a different ultrasonic signal simulation, the performing the fitting and the determining the accuracy of the fitting, wherein, when the determined accuracy satisfies the reference value, the performing the shape profile inspection may further include: quantifying one or more measurement values for the target structure and/or the target defect, wherein the measuring the ultrasonic signal may further include: measuring a signal based on a vertical stack of a semiconductor device, measuring a reference signal, measuring the target structure of the semiconductor device, generating an arbitrary waveform, transmitting the generated arbitrary waveform to a signal transmission and reception apparatus included in a system configured to inspect semiconductor devices, and switching a type of a signal of the signal transmission and reception apparatus to a pulse or an echo, wherein, when the type of the signal is switched to the pulse, the measuring the ultrasonic signal may further include: generating an ultrasonic pulse as the pulse, by a signal transmission portion of the signal transmission and reception apparatus, and transmitting, by the signal transmission portion, the ultrasonic pulse to the semiconductor device, wherein information of the echo, which is based on the semiconductor device and received by a signal receiving portion of the signal transmission and reception apparatus, is transmitted to a switch portion of the signal transmission and reception apparatus, wherein, when the type of the signal is switched to the echo, the measuring the ultrasonic signal may further include: measuring the echo using an oscilloscope, and collecting data measured by the oscilloscope using data acquisition (DAQ).

One or more embodiments of the disclosure, may provide a system for inspecting semiconductor devices may include a signal generation apparatus configured to generate an ultrasonic signal for inspecting a semiconductor device, a signal transmission and reception apparatus including a signal transmission portion configured to transmit a pulse signal, which is an ultrasonic signal delivered from the signal generation apparatus, to the semiconductor device, and a signal receiving portion configured to receive an echo signal, which is the ultrasonic signal reflected from the semiconductor device, and a signal processing apparatus configured to process the signal delivered from the signal transmission and reception apparatus , wherein the signal generation apparatus may include a position controller configured to control a position of a wafer including the semiconductor device, a waveform generator configured to generate the pulse signal, and a waveform amplifier configured to amplify a waveform of the pulse signal.

In one or more embodiments the signal transmission and reception unit may further include a switch portion configured to perform switching of the pulse signal and the echo signal, the signal transmission portion may include a transducer placed above a tip, the signal receiving portion may include a probe, and may be configured to be replaceable, and the tip may physically contact the semiconductor device.

In one or more embodiments the signal processing unit may include a generator-side waveform amplifier configured to amplify a waveform of the echo signal, an oscilloscope configured to receive and obtain information of the echo signal, and a data acquisition system configured to collect the information of the echo signal.

In one or more embodiments the position controller may be configured to control positions of the wafer, the transducer, and the probe based on result values collected in the data acquisition system, and to control the result values.

In one or more embodiments the transducer may be configured to physically vibrate the semiconductor device in a range of about 1 GHz to about 20 GHz and to generate the ultrasonic signal.

In one or more embodiments a diameter of a contact area where the transducer comes into contact with the semiconductor device may be within a range of about 100 nm to about 5000 nm.

In one or more embodiments the signal generation apparatus , the signal transmission and reception apparatus , and the signal processing apparatus may be configured to measure the target structure of the semiconductor device, measurement of the target structure of the semiconductor device may include measuring an error value caused by measurement equipment, adjusting a zero point of the measured value, and measuring a specimen after the zero point adjustment and, in plan view, the measurement may be sequentially performed for at least nine regions using a single transducer.

In one or more embodiments the measurement of the target structure of the semiconductor device may include setting a frequency range, applying vibration to the semiconductor device using the transducer while varying the frequency within the set range, selecting and measuring a first resonant frequency at which resonance first occurs within the frequency range, and selecting and measuring a second resonant frequency at which resonance second occurs within the frequency range, wherein the signal processing unit may be configured to extract a horizontal structure according to a vertical position of the semiconductor device, based on measurement values obtained from each of the first resonance frequency and the second resonance frequency.

In one or more embodiments the measurement of the target structure of the semiconductor device may include setting a frequency range of vibration, applying vibration to the semiconductor device by using the transducer while varying the frequency within the set range, selecting a frequency at which no resonance occurs within the set frequency range, and measuring by using the selected frequency, wherein the signal processing unit may be configured to extract a vertical structure according to a horizontal position of the semiconductor device, based on measurement values obtained from the frequency at which no resonance occurs.

In one or more embodiments the semiconductor device may include at least one layer, and a hole area formed inside the semiconductor device may have a tapered shape in which a horizontal cross-sectional area thereof gradually decreases along the vertical direction.

At least some of the above and other features of the invention are set out in the claims.

### BRIEF DESCRIPTION OF DRAWINGS

Embodiments will be more clearly understood from the following detailed description taken in conjunction with the accompanying drawings in which:
FIG. 1 is a diagram illustrating a flowchart of a method of inspecting semiconductor devices, according to an embodiment.
FIG. 2 is a detailed flowchart of a signal measurement operation included in a method of inspecting semiconductor devices according to an embodiment.
FIG. 3 is another detailed flowchart of a signal measurement operation included in a method of inspecting semiconductor devices according to an embodiment;
FIG. 4 is a schematic diagram illustrating a configuration of a system for inspecting semiconductor devices according to an embodiment;
FIG. 5 is an equivalent circuit diagram of a memory cell array of a semiconductor device according to an embodiment;
FIG. 6 is a cross-sectional view of a semiconductor device according to an embodiment;
FIG. 7 is a perspective view showing an enlarged region A of FIG. 6;
FIG. 8 is a plan view illustrating a semiconductor device from the perspective of a vertical axis according to an embodiment;
FIG. 9 is a plan view illustrating a semiconductor device from the perspective of a vertical axis according to an embodiment;
FIG. 10 is a conceptual diagram illustrating various types of inspection of a semiconductor device according to an embodiment;
FIG. 11 is a conceptual diagram illustrating an inspection of a semiconductor device by using a system for inspecting semiconductor devices according to an embodiment;
FIG. 12 is a plan view showing a bottom surface of a system for inspecting semiconductor devices according to an embodiment;
FIG. 13 is a conceptual diagram illustrating an inspection of a semiconductor device according to an embodiment;
FIG. 14 is a conceptual diagram illustrating another inspection of a semiconductor device according to an embodiment;
FIG. 15 is a detailed flowchart illustrating operations of measuring a target structure in FIG. 2 according to an embodiment;
FIG. 16 is a conceptual diagram illustrating an inspection of a semiconductor device according to an embodiment in accordance with the flowchart of FIG. 15;
FIG. 17 is another detailed flowchart illustrating operations of measuring the target structure in FIG. 2 according to an embodiment;
FIG. 18 is a conceptual diagram illustrating the inspection of a semiconductor device according to an embodiment in accordance with the flowchart of FIG. 17;
FIG. 19 is a graph showing decibel values over time during an inspection of a semiconductor device according to an embodiment;
FIG. 20 is another detailed flowchart illustrating operations of measuring the target structure in FIG. 2 according to an embodiment;
FIG. 21 is a conceptual diagram illustrating an inspection of a semiconductor device according to the flowchart of FIG. 20 according to an embodiment;
FIG. 22 is a graph showing decibel values over time during an inspection of a semiconductor device according to an embodiment;
FIG. 23 is another detailed flowchart illustrating measuring the target structure in FIG. 2 according to an embodiment;
FIG. 24 is a conceptual diagram illustrating an inspection of a semiconductor device according to an embodiment in accordance with the flowchart of FIG. 23;
FIG. 25 is a schematic diagram illustrating an electronic system including a semiconductor device according to an embodiment;
FIG. 26 is a perspective view illustrating an electronic system including a semiconductor device according to an embodiment;
FIG. 27 is a cross-sectional view illustrating a semiconductor package including a semiconductor device according to an embodiment;
FIG. 28 is a schematic block diagram of a shape profile measuring system according to an embodiment; and
FIG. 29 is a flowchart illustrating a method of manufacturing a semiconductor device including a method of inspecting a shape profile according to an embodiment.

### DETAILED DESCRIPTION

The one or more embodiments described herein may be subject to various modifications and may take on different forms, and some one or more embodiments are illustrated in the drawings and described in detail below. However, this is not intended to limit the one or more embodiments to any particular disclosed forms. The one or more embodiments described below are merely illustrative, and various modifications may be derived therefrom.

The use of all examples or exemplary terms herein is solely for the purpose of describing the disclosure in detail and is not intended to limit the scope of the disclosure unless otherwise defined by the claims.

Unless otherwise specified, in the disclosure, a vertical direction is defined as a Z direction, and a first horizontal direction and a second horizontal direction may be defined as horizontal directions perpendicular to the Z direction, respectively. The first horizontal direction may be referred to as an X direction, and the second horizontal direction may be referred to as a Y direction. A vertical level may refer to a height level along the vertical direction (Z direction). The vertical direction may be a direction in which a stack of layers of a semiconductor device is stacked. The vertical direction may be otherwise known as a depth direction. The vertical direction may be perpendicular to a substrate upon which the layers are stacked. A horizontal width in the first horizontal direction may refer to a length in the horizontal direction (X and/or Y direction), and a vertical length may refer to a length in the vertical direction (Z direction). It will be appreciated that the terms "vertical", "horizontal", and similar terms are defined relative to the structure of the semiconductor device, and need not imply any particular orientation of the device during inspection or in use.

As used herein, the terms "substantially," "about," and similar terms are used as terms of approximation and not as terms of degree, and are intended to account for the inherent variations in measured or calculated values that would be recognized by those of ordinary skill in the art. Parameters and/or ends of ranges that are quoted as being "about" a certain value (e.g. "about X") may be considered equal to that value (e.g. "equal to X"). Nevertheless, any values quoted herein may include variations of that value within commonly accepted errors, margins and/or tolerances (e.g. manufacturing tolerances). For instance, any values quoted herein may also cover variations within ±5% or ±10%.

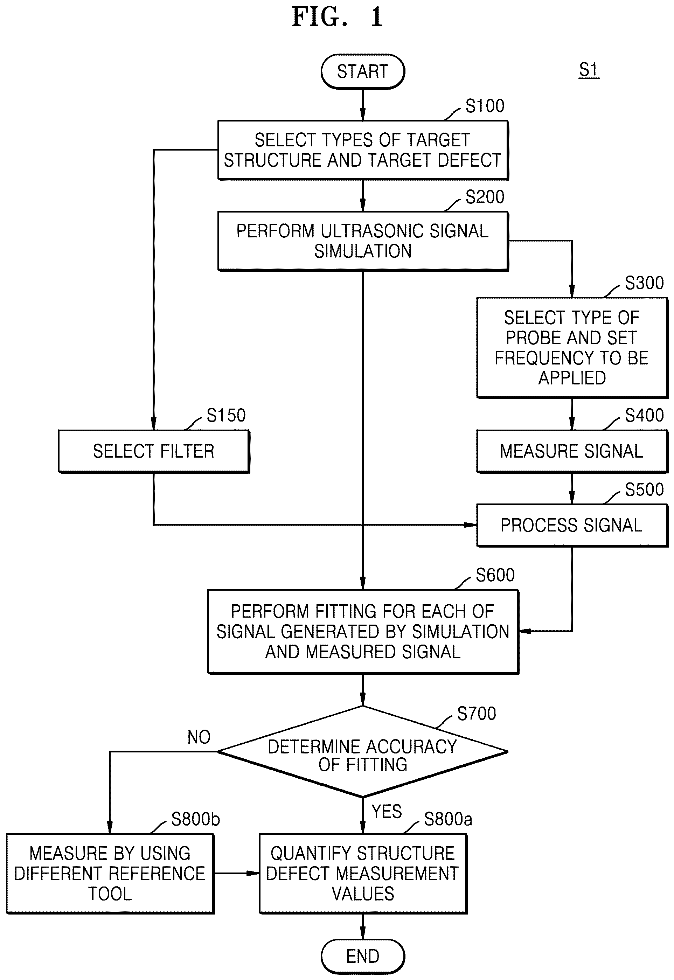

FIG. 1 is a diagram illustrating a flowchart of a method of inspecting semiconductor devices, according to an embodiment.

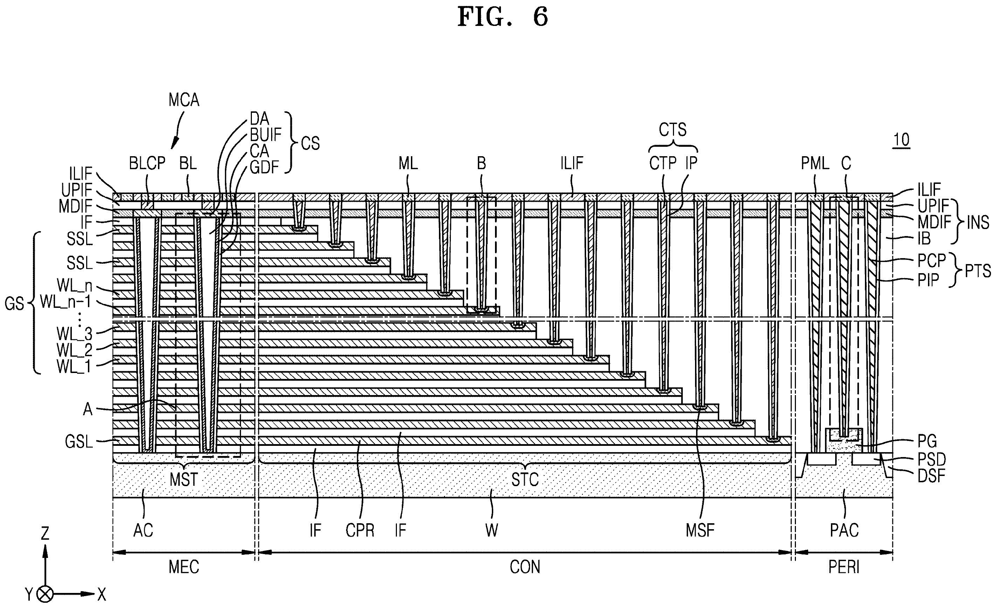

Referring to FIG. 1, a method S1 of inspecting semiconductor devices may be a method of inspecting a semiconductor device 10 of FIG. 6 including at least one layer, and may include operation S 100 of respectively selecting a type of a target structure of the semiconductor device 10 and a type of a target defect within the target structure, which are to be inspected. In operation S100, layer information in the depth direction of the stack-type semiconductor device 10 of FIG. 6 to be measured may be identified.

The method S1 of inspecting semiconductor devices may include operation S150, which is performed following operation S 100, of selecting a filter corresponding to (i.e., based on, related to, and/or matching) both the target structure and the target defect of the semiconductor device 10 of FIG. 6, and operation S200 of performing an ultrasonic signal simulation for the target structure of the semiconductor device 10.

The method S1 may include operation S300 of selecting a type of a probe included in a signal transmission portion of a signal transmission and reception unit and setting a frequency to be applied to a tip of the probe, which is performed following operation S200, operation S400 of measuring a response signal while applying an ultrasonic signal of the frequency set in operation S300 to the semiconductor device 10 of FIG. 6, and operation S500 of processing the signal measured in operation S400.

Operation S150 may be performed in series or in parallel with one or more of operations S200, S300 and S400.

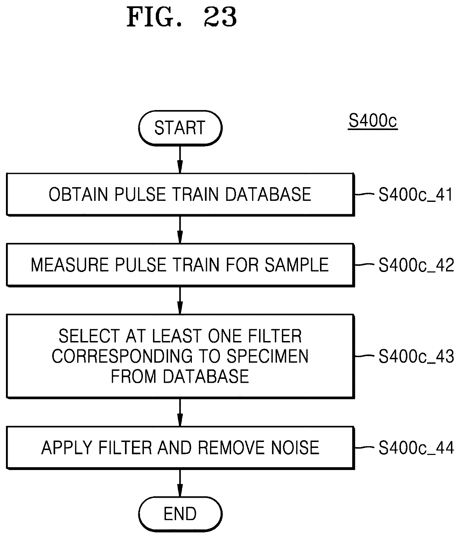

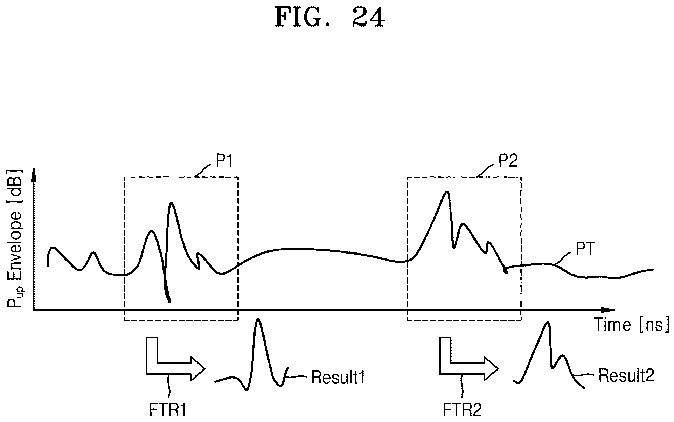

In the process of processing the signal in operation S500, the filter selected in operation S150 may be used. That is, the filter selected in operation S150 may be applied in the S500 step. In the present application, "applying a filter" can be understood as a post-processing step for correcting or compensating the data after measurement, using a simulated impulse response of a specific target structure-defect combination. In addition, if the filter is considered an impulse response, it may include a tip transfer function to compensate for a measurement transfer function. The processing of the signal may be performed by a stored filter based on a pulse train composed of ultrasonic pulses previously obtained for various structures before performing the inspection (e.g., based on a stored pulse train for the structure and/or defect). In one example, many a priori information are known about the sample itself (e.g. geometry, materials) and the expected defects, the filters are chosen accordingly in a large database of pre-modelled responses. A description of a process in which the filter selected in operation S150 is used in operation S500 is provided with reference to FIGS. 23 and 24. Furthermore, in FIG. 1, the filter selected in operation S150 is shown as being applied to S500, but it may also be additionally applied in operation S600.

An appropriate filter for each structure and/or defect may be determined through a prior calibration or modelling process. In particular, the filter may be regarded as an impulse response characteristic of a sample with or without defects, which may be modelled by applying a short input pulse so as to obtain a wide frequency-band response. Based on these responses, impulse response functions corresponding to respective structure-defect combinations may be derived and defined as filters.

In practice, prior information about the sample (e.g., geometry and materials) and expected defect types may be used to select appropriate filters from a database of pre-modelled responses. During inspection, one or more candidate filters may be retrieved from the database and applied to the measured signal, and the filter providing the highest similarity or fitting accuracy may be determined as the appropriate filter.

The method S1 may include, following operation S500, operation S600 of performing fitting between the simulated signal and the measured signal. The simulated signal to be used for performing fitting in operation S600 is the simulation result obtained in operation S200, and the measured signal to be used for performing fitting refers to the result obtained by completing processing in operation S500 on the signal measured in operation S400. While performing the fitting in operation S600, the fitting may be performed for each frequency of the ultrasonic signal. The simulated signal may serve as a reference signal for the measured signal to be used in performing the fitting. That is, information about a vertical stack of the semiconductor device 10 of FIG. 6 to be measured may be obtained, an inflection point of an inter-layer in the layer structure of the semiconductor device 10 of FIG. 6 may be identified, and the simulation may be performed for a shape most similar to the identified one. A "most similar" shape may be determined based on one or more parameters and/or dimensions related to the shape(s) under consideration, but is not limited to any particular parameter, dimension, and/or combination thereof. Furthermore, in one or more embodiments, any parameters and/or dimensions of interest may be assigned a corresponding weighted value score based on user preferences. Operation S400 may include obtaining ultrasonic signals by measuring based on three-dimensional (3D) scanning in individual layers per target.

In operation S600, the simulated signal is fitted to the measured signal. Specifically, the measured ultrasonic response obtained from the target device is compared with one or more simulated signals generated based on candidate structural models. Because each simulated signal is derived from a specific structural configuration-including geometric parameters, layer thicknesses, material properties, and/or defect conditions-the fitting process directly relates the measured signal to the physical structure of the device.

In one or more embodiments, a plurality of different structural shapes and/or defect scenarios are simulated in advance, thereby generating a corresponding plurality of simulated signals. The simulated signal that exhibits the highest similarity to the measured signal, according to a predefined similarity metric (e.g., least-squares error, correlation coefficient, frequency-domain deviation, or a composite metric), is determined to represent the structural shape most similar to that of the measured device.

The weighted value scores are applied during the calculation of the similarity metric by assigning different relative weights to selected parameters or signal features. For example, parameters such as layer thickness variation, inter-layer boundary position, defect size, resonance peak shift, or amplitude variation at specific frequencies may be assigned higher weights depending on user-defined priorities or expected defect sensitivity. The weighted metric ensures that structurally significant features contribute more strongly to the fitting outcome.

The fitting result is used for both purposes. First, in operation S700, the similarity metric is evaluated to determine whether the fitting accuracy satisfies a preset threshold. Second, when the accuracy satisfies the preset threshold, the parameters associated with the selected structural model are used in operation S800a to quantify structural or defect-related measurement values. Accordingly, the fitting is not limited to accuracy determination, but also forms the basis for quantitative evaluation of the structure and/or defect
The method S1 may include operation S700 of determining accuracy for fitting values obtained in operation S600. A reference threshold for the accuracy to be determined in operation S700 may be preset (e.g., in operation S100).

When the accuracy determined in operation S700 satisfies a preset threshold, operation S800a of quantifying a measurement value for the target structure and the target defect within a semiconductor device may finally be performed. More specifically, quantification may be performed for a profile having a 3D structure with respect to each individual unit of a target. When the accuracy determined in operation S700 does not satisfy the preset threshold, operation S800b of measuring by another reference tool may be performed. The other reference tool may refer to a set of settings in which respective types of different target structures and different target defects are selected in operation S100, and based on the different values selected in operation S100, a different filter is selected in operation S150, and/or different simulation values are selected in operation S200. After measuring with the other reference tool selected in operation S800b, operation S800a may be performed for the measured values. In other words, when the determined accuracy does not satisfy a reference value upon performing operation S700, the operation of "using a reference tool" in S800b may repeat each of operations S100, S150, and S200 using a different target structure, a different target defect, a different filter, and/or different simulation values. Then, operation S800b may repeat the "fitting" step of operation S600 based on any different simulation values associated with the "reference tool", and may also repeat the "determining an accuracy" step of operation S700. Finally, if the repeated operation S700 determines that the fitting is accurate, then operation S800a may perform the step of "quantifying structure defect measurement values". The method may be stopped (e.g., aborted) in response to a predefined number of repetitions (e.g., a predefined number of implementations of operation S800b) without the accuracy of fitting being determined to satisfy the preset threshold. In one example, if no convergence is reached in S800b, it may mean that a defect has been detected but could not be characterized (e.g. a new type of defect not present in the filter database).

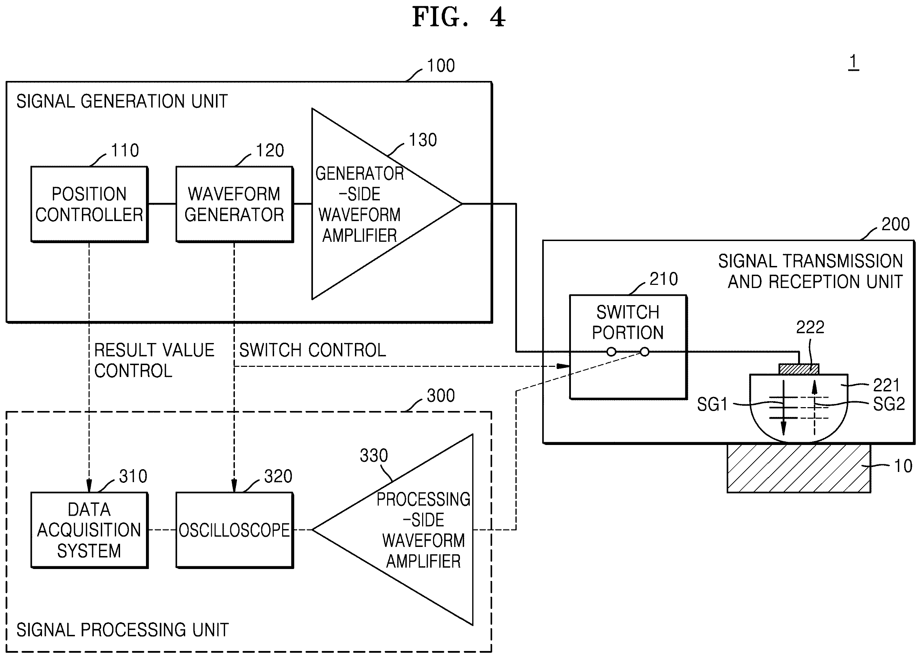

Operations S100, S150, S200, and S300 may be performed in a signal generation unit 100 (e.g., a signal generation apparatus or device) of FIG. 4 included in a system 1 of FIG. 4 for inspecting semiconductor devices. Operation S400 may be performed in the signal generation unit 100 illustrated in FIG. 4 and the signal transmission and reception unit 200 included in the semiconductor device inspection system 1 of FIG. 4. In the present application, the signal transmission and reception unit 200 may be understood as "a probe" configuration that supports a transducer 222 and a tip 221 and applies a controlled force to the tip 221 (e.g., an apparatus or device comprising a switch portion 210, a tip 221, and a transducer 222) included in the system 1 for inspecting semiconductor devices of FIG. 4.

The tip 221 of the present embodiment may be configured to ensure contact with the sample 10 and to transfer acoustical signals during transmission SG1 and reception SG2. The transducer 222 of the present embodiment may be configured to convert electrical energy into acoustical energy during transmission and to convert acoustical energy into electrical energy during reception.

More specifically, signal transmission in signal measurement may be performed by generating a transmission signal, which is a pulse SG1, at the transducer 222, which is the signal transmission portion of the signal generation unit 100 of FIG. 4; and signal receiving in the signal measurement may be performed by receiving an echo SG2, which is a received signal, at the signal transmission and reception unit (probe) 200, which is a signal receiving portion of the signal generation unit 100 of FIG. 4. Hereinafter, "the pulse SG1" of FIG. 4, which is the transmission signal may also be referred to as a "pulse signal" or a "first signal." Hereinafter, the reception signal, which is the echo SG2 of FIG. 4, may also be referred to as an "echo signal" or a "second signal." Operations S600, S700, and S800a may be performed in a signal processing unit 300 of FIG. 4 included in the system 1 of FIG. 4 for inspecting semiconductor devices. Operation S800b may be performed together in the signal generation unit 100 of FIG. 4, the signal transmission and reception unit 200 of FIG. 4, and the signal processing unit 300 of FIG. 4.

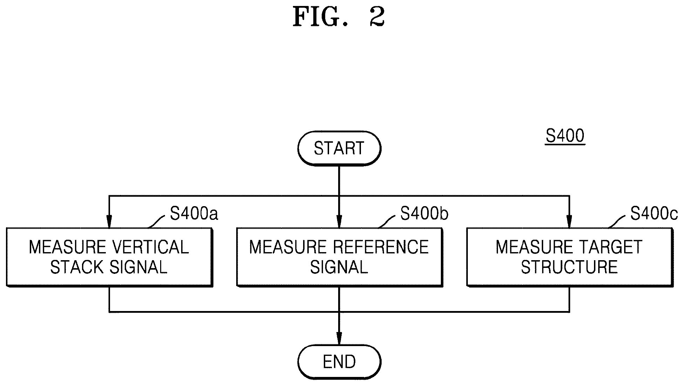

FIG. 2 is a detailed flowchart of a signal measurement operation included in a method of inspecting semiconductor devices according to an embodiment.

FIG. 2 is to be referred to together with FIG. 1. Referring to FIG. 2, operation S400 may include operation S400a of measuring a signal for the vertical stack, operation S400b of measuring the reference signal to be compared with the measured signal, and operation S400c of measuring the target structure of a semiconductor device. The "signal for the vertical stack" may be a signal that is transmitted through and, thus, indicative of a structure of the vertical stack, such that the signal may be considered based on and/or related to the vertical stack. Furthermore, "measuring the target structure" may include identifying, gathering, and/or processing data or information related to any parameters, dimensions, shapes, orientations, or other characteristics of the target structure. Operations S400a, S400b, and S400c may be performed simultaneously in parallel, or in series (e.g., in any order). For instance, operation S400b may be performed after operation S400a, and finally, operation S400c may be sequentially performed in series. The measuring a signal of the vertical stack means prioritizing the measurement of signals for vertical stacks adjacent to a target to be actually measured in the semiconductor device. Signals measured in operation S400a may partially overlap with the reference signal measured in operation S400b. The signals measured in operation S400b may correspond not only to signals for the vertical stacks adjacent to a target to be actually measured, but also to measured signals for other semiconductor devices having a structure similar to that of the signal measured in operation S400a, based on the vertical stack signal measured in operation S400a.

In the present application, the reference signal may refer to a signal representing the result at a known location where no defects are expected. Therefore, the S400b step can be understood as reading the signal from a pre-stored database. For instance, the reference signal may be a stored signal that was previously measured from a structure (e.g., that is the same as or similar to the target structure) that is known to have no defects. According to one or more embodiments, the reference signal can be obtained at a location where the process proceeds normally, the 3D structural profile of the individual unit is well formed, and uniformity with surrounding units may be maintained.

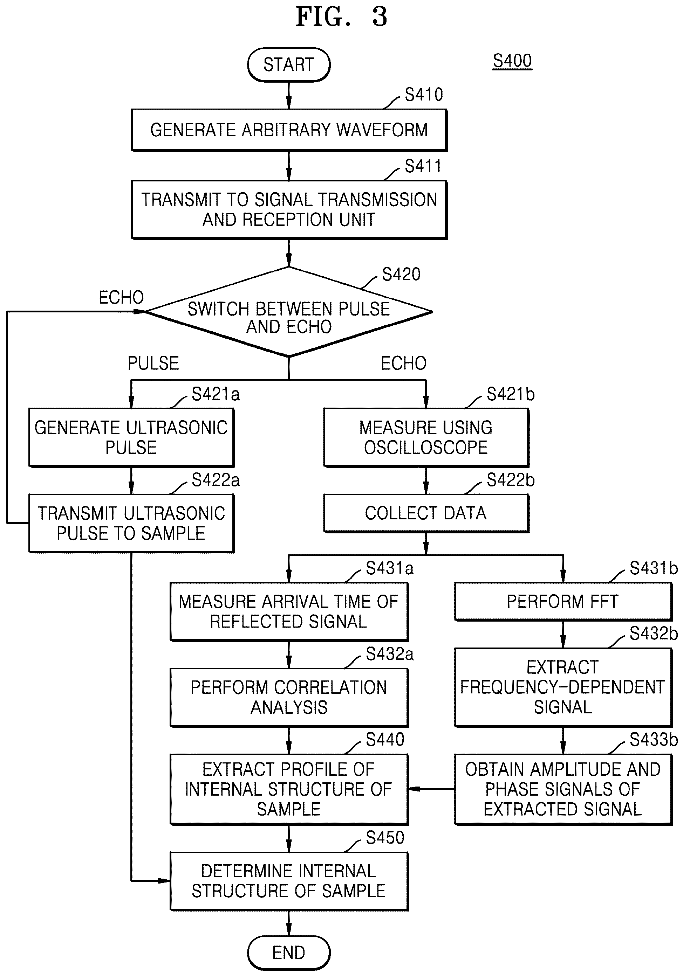

FIG. 3 is another detailed flowchart of a signal measurement operation included in a method of inspecting semiconductor devices according to an embodiment. FIG. 4 is a schematic diagram illustrating a configuration of a system for inspecting semiconductor devices according to an embodiment.

FIGS. 3 and 4 are referenced together with FIGS. 1 and 2. Hereinafter, a sample in FIG. 3 may correspond to a specimen or the semiconductor device 10 to be inspected. In the disclosure, a "sample" may correspond to a "specimen" in operation S400. Operation S400 of measuring the ultrasonic signal may include operation S410 of generating an arbitrary waveform. Operation S410 may include generating a set waveform, which may correspond to a signal for driving the tip 221. The arbitrary waveform may include a pulse wave, a sine wave, a cosine wave, and a square wave. Operation S410 may be performed by the signal generation unit 100.

Operation S400 may include operation S411 of delivering a signal of the generated waveform (e.g., from the signal generation unit 100) to the signal transmission and reception unit 200, which is performed after operation S410. The signal transmission and reception unit 200 may be configured to convert (transmit) an electric signal output in operation S410 into a pulse SG1, which is an ultrasonic signal, and to receive the echo SG2 that is returned by reflection.

Operation S400 may include operation S420 of switching between the pulse SG1 and the echo SG2, which is performed after operation S410. Operation S420 may be performed in the switch portion 210 included in the signal transmission and reception unit 200. The switch portion 210 may deliver an electrical signal generated in the signal generation unit 100 to the signal transmission and reception unit 200, the signal transmission and reception unit 200 may convert the electrical signal into an ultrasonic signal, and the switch portion 210 may deliver the echo SG2 received at the signal transmission and reception unit (probe) 200 to the signal processing unit 300. According to one embodiment, the signal transmission and reception unit (probe) 200 in the present embodiment may be a Half-Wavelength Contact Acoustic Microscopy (HaWaCAM) cantilever. In addition, the signal transmission and reception unit (probe) 200 may include a tip 221, and an electrode for electrical contact. In the present embodiment, the tip 221 included in the signal transmission and reception unit (probe) 200 may be understood as the part located beneath the transducer 222 that makes contact with the sample. That is, the switch portion 210 may be configured to switch between the pulse SG1, which is the transmitted signal, and the echo SG2, which is the reflected signal. In other words, the pulse SG1 may be the signal that is transmitted as an ultrasonic signal to the semiconductor device 10, and the echo SG2 may correspond to the signal that is reflected and returned from the semiconductor device 10. The switch portion 210 may therefore control the transmission and reception unit 200 to switch between transmitting a signal and receiving a signal.

Operation S400 may include operation S421 of generating an ultrasonic wave when switched to the pulse SG1 in operation S420, and operation S422a of transmitting the pulse SG1 generated to the semiconductor device 10, which is the specimen. The echo SG2 generated by the reflection of the ultrasonic wave transmitted in operation S422a at the semiconductor device 10, which is the specimen, may be delivered to operation S420. That is, after operation S422a, operation S420 may be repeated to switch to receiving the echo SG2. The switch portion 210 may deliver the received echo SG2 to the signal processing unit 300.

Operation S400, when the signal is switched to the echo SG2 in operation S420, may include operation S421b of measuring the echo SG2, received in operation S422a, by using an oscilloscope 320 included in the signal processing unit 300. Operation S421b may be performed to visually record the echo SG2, which is the reflected signal, in a time domain. That is, operation S421b may correspond to providing amplitude and time information of the echo SG2.

Operation S400 may include operation S422b of performing data acquisition (DAQ) after operation S421b. Operation S422b may digitize oscilloscope data and deliver the digitized data to analysis software. Operation S422b may be performed in a data acquisition system 310. The data acquisition system 310 may correspond to a server or personal computer (PC), each including a memory, and a central processing unit (CPU).

Operation S400 may include operation S431a of measuring an arrival time of the echo SG2, which is the reflected signal, based on the data collected in operation S422b. Operation S431a may measure a time of flight, which is the time taken for the signal to travel a round trip through a sample. The time of flight may correspond to the sum of the travel time of the pulse SG1 and the travel time of the echo SG2. The time of flight may correspond to the time difference between the time at which the pulse SG1 is transmitted, and the time at which the echo SG2 is received. Operation S431a may measure the arrival time of the reflected signal to analyze a distance and a property inside the sample, and the analysis result may be used to calculate the thickness or internal structural information of the sample. The "property" inside the sample may be related to a structural, electrical, mechanical, and/or material characteristic of the semiconductor device 10, but is not particularly limited thereto. With regard to the semiconductor device 10, one or more embodiments may measure film thickness, mechanical strength, material stiffness and/or hardness, prevalence and nature of structural defects, as well as structural and material uniformity of components, films, and other features. For instance, with regard to the semiconductor device 10, one or more embodiments may measure one or more of: film thickness, mechanical strength, material stiffness, material hardness, prevalence of structural defects, nature of structural defects, structural uniformity of components, structural uniformity of films, material uniformity components and material uniformity of films.

Operation S400 may include operation S432a, which is performed after operation S431a, of comparing the echo SG2, which is the reflected signal, to the pulse SG1, which is the original signal, to measure a time delay and a reflection intensity, and analyzing internal structural or shape information of the sample based on a correlation therebetween.

Operation S400 may include operation S431b of performing a fast Fourier transform (FFT) on the data collected in operation S422b. Operation S431b may be configured to convert a time-domain signal into a frequency-domain signal and to calculate amplitude and phase information according to frequencies, or to analyze frequency dependence of the signal.

Operation S400 may include operation S432b, which is performed after operation S431b, of extracting a frequency-dependent signal. Operation S431b may analyze how the signal responds at a specific frequency by analyzing the signal, which is generated as a result of the FFT and varies with frequencies, and may thereby analyze physical characteristics of the sample, such as thickness, impedance, and/or internal defects. Operation S400 may include operation S433b of obtaining amplitude and phase information of the signal extracted in operation S43 1b.

Operation S400 may include operation S440 of extracting a profile of the internal structure of the device based on the data analyzed in operation S432a and the amplitude and phase information obtained in operation S433b. Operation S440 may extract shape deformation inside the sample (e.g., determine shape deformation information of the sample) based on the data analyzed in operation S432a and the amplitude and phase information obtained in operation S433b, and operation S450 of determining an internal structure of the sample. Operation S400 may include operation S450 of determining an internal structure of the sample. In operation S450, information on the echo SG2 switched in operation S420 as well as information on the pulse SG1 transmitted in operation S422a may be used together.

With reference to FIGS. 3 and 4, operations S420, S421a and S422a may be performed by the signal transmission and reception unit (probe) 200. Operations S421b, S422b, S431b, S432b, S433b, S431a, S432a, S440 and S450 may be performed by the signal processing unit 300.

Referring to FIG. 4, the system 1 for inspecting semiconductor devices may include the signal generation unit 100, the signal transmission and reception unit 200, and the signal processing unit 300. In the system 1, the signal generation unit 100 may be configured to generate the ultrasonic signal for inspecting the semiconductor device 10, the signal transmission and reception unit 200 may include the signal transmission portion configured to transmit the pulse SG1, which is the ultrasonic signal delivered from the signal generation unit 100, to the semiconductor device 10, the signal receiving portion configured to receive the echo SG2, which is the ultrasonic signal reflected from the semiconductor device 10, and the switch portion 210 configured to control switching between the pulse SG1 and the echo SG2, and the signal processing unit 300 is configured to process the signal delivered from the signal transmission and reception unit 200.

The signal generation unit 100 may include a position controller 110 configured to control a position of a wafer including the semiconductor device 10 and positions of the tip 221 as a signal transmission portion and the transducer 222 as a signal receiving portion of the signal transmission and reception unit 200, a waveform generator 120 configured to generate the pulse signal, and a generator-side waveform amplifier 130 configured to amplify a waveform of the pulse signal.

The signal processing unit 300 may include a processing-side waveform amplifier 330 configured to amplify a waveform of the echo SG2, the oscilloscope 320 configured to receive and obtain information of the echo signal, and the data acquisition system 310 configured to collect the information of the echo signal.

The position controller 110 may be configured to control positions of the wafer, the transducer 222, and the tip 221 based on result values collected in the data acquisition system 310, and to control the result values. The position controller 110 may output one or more control signals for controlling one or more actuators (e.g., motors) for adjusting the relative positions of the wafer, the transducer 222, and the tip 221.

The switch portion 210 may switch between the pulse and the echo according to operation S420, receive the pulse generated by the waveform generator 120, and deliver the echo to the oscilloscope 320.

The generator-side waveform amplifier 130 may be configured to amplify the signal delivered from the waveform generator 120, and the amplified signal may be delivered to the signal transmission and reception unit 200. In contrast, the processing-side waveform amplifier 330 may be configured to amplify the signal delivered from the signal transmission and reception unit 200 and the amplified signal may be delivered to the oscilloscope 320. That is, the generator-side waveform amplifier 130 may amplify the signal to be applied as vibration to the specimen, and the processing-side waveform amplifier 330 may amplify the signal reflected from the specimen.

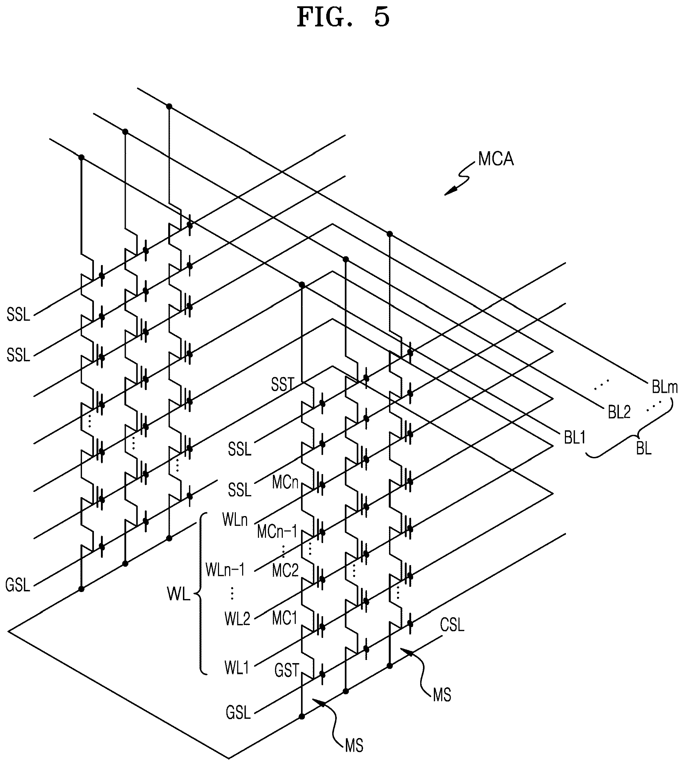

The tip 221 may be physically in contact with an upper surface of the semiconductor device 10 and may apply vibration to the semiconductor device 10 by using the signal delivered from the signal generation unit 100. The tip 221 may be configured to generate the ultrasonic signal by applying vibration to the semiconductor device 10 within a range of about 1 GHz to about 50 GHz. The semiconductor device 10 may include one or more layers, and details thereof are described with reference to FIGS. 5 to 7. The signal transmission and reception unit may comprise one or more actuators for controlling the relative positions of relative positions of the wafer, the transducer 222, and the tip 221.

FIG. 5 is an equivalent circuit diagram of a memory cell array of a semiconductor device according to an embodiment.

Referring to FIG. 5, a memory cell array MCA may include a plurality of memory cell strings MS. The memory cell array MCA may include a plurality of bit lines BL: BL1, BL2, ..., BLm-1, BLm, a plurality of word lines WL: WL1, WL2, ..., WLn-1, WLn, at least one string select line SSL, at least one ground select line GSL, and a common source line CSL. The plurality of memory cell strings MS may be formed between the plurality of bit lines BL: BL1, BL2, ..., BLm-1, BLm and the common source line CSL. FIG. 2 illustrates a case where each of the plurality of memory cell strings MS includes two string select lines SSL, but the technical ideas of the disclosure is not limited thereto. For example, each of the plurality of memory cell strings MS may include one string select line SSL.

Each of the plurality of memory cell strings MS may respectively include a string select transistor SST, a ground select transistor GST, and a plurality of memory cell transistors MC1, MC2, ..., MCn-1, MCn. Drain areas of the string select transistors SST may be connected to the bit lines BL: BL1, BL2, ..., BLm-1, BLm, and source areas of the ground select transistors GST may be connected to the common source line CSL. The common source line CSL may be a region where source regions of a plurality of ground select transistors GST are commonly connected.

The string select transistor SST may be connected to the string select line SSL, and the ground select transistor GST may be connected to the ground select line GSL. Each of the plurality of memory cell transistors MC1, MC2, ..., MCn-1, MCn may be connected to the plurality of word lines WL: WL1, WL2, ..., WLn-1, WLn, respectively.

FIG. 6 is a cross-sectional view of a semiconductor device according to an embodiment.

Referring to FIG. 6, the semiconductor device 10 may include a wafer W having a memory cell region MEC, a connection region CON, and a peripheral circuit region PERI. According to one or more embodiments, an active region AC may be defined in a memory cell region MEC of the wafer W, and a peripheral active region PAC may be defined in the peripheral circuit region PERI.

According to one or more embodiments, the peripheral active region PAC may be defined by a device separation layer DSF. For example, the memory cell array MCA may be formed on the active region AC of the memory cell region MEC according to a manufacturing process of the semiconductor device 10 described below. For example, the connection region CON may be positioned adjacent to an edge side of the memory cell region MEC. The memory cell region MEC may be separated from the peripheral circuit region PERI by the connection region CON. Although only the connection region CON arranged on one side of the memory cell region MEC is illustrated in FIG. 3, the connection region CON may be arranged on each side of the first horizontal direction X of the memory cell region MEC.

According to one or more embodiments, the device separation layer DSF defining the peripheral active region PAC may be formed in a peripheral circuit region PERI of the wafer W. A peripheral transistor may be formed on the peripheral active region PAC. The peripheral transistor may constitute a part of a plurality of circuits formed on the peripheral circuit region PERI. The peripheral transistor may be configured to be electrically connected to the memory cell region MEC through a wiring structure arranged in the connection region CON. The peripheral transistor may include a peripheral gate PG and a peripheral source/drain area PSD formed within the peripheral active region PAC on either side of the peripheral gate PG. In one or more embodiments, unit elements such as resistors and capacitors may be further arranged on the peripheral circuit region PERI. According to one or more embodiments, the wafer W may include Si, Ge, or SiGe.

According to one or more embodiments, a plurality of insulating films IF and a plurality of sacrificial layers (not shown) may be alternately stacked one layer at a time on the memory cell region MEC and the connection region CON of the wafer W. After the plurality of sacrificial layers (not shown) are removed during a process, the ground select line GSL and a conductive pad region CPR may be formed at the location where the sacrificial layers were removed. According to one or more embodiments, the plurality of insulating films IF may include silicon oxide, silicon nitride, or silicon oxynitride. According to one or more embodiments, the plurality of sacrificial layers (not shown) may include silicon nitride, silicon carbide, or polysilicon. For example, the plurality of insulating films IF may include silicon oxide, and the plurality of sacrificial layers (not shown) may include silicon nitride.

After forming an etch-stop layer (not shown) covering the uppermost insulating film IF among the plurality of insulating films IF, a portion of each of the plurality of insulating films IF and the plurality of sacrificial layers (not shown) is removed by a photolithography process in the connection region CON so that one end of each of the plurality of insulating films IF and the plurality of sacrificial layers (not shown) may form a step-like structure STC having a width that gradually decreases in the horizontal direction away from the wafer W. After that, an insulating block IB covering the step-like structure STC and a peripheral transistor TR may be formed on a substrate WC.

Thereafter, a plurality of channel holes extending in the vertical direction Z are formed through the plurality of insulating films IF and the plurality of sacrificial layers (not shown) in the memory cell region MEC, and a gate dielectric layer GDF, a channel region CA, and a buried insulating film BUIF are formed inside each of the plurality of channel holes, thereby forming a plurality of channel hole-burying structures. Before forming the gate dielectric layer GDF, the channel region CA, and the buried insulating film BUIF inside each of the plurality of channel holes, the method S1 described with reference to FIG. 1 may be performed. That is, the plurality of channel holes may correspond to one of hole areas inspected by the method S1 in FIG. 1. The plurality of channel holes may be defined as region A.

According to one or more embodiments, the gate dielectric layer GDF may include silicon oxide, hafnium oxide, aluminum oxide, zirconium oxide, tantalum oxide, silicon nitride, boron nitride, silicon boron nitride, impurity-doped polysilicon, a metal oxide, or combinations thereof. The metal oxide may include hafnium oxide, aluminum oxide, zirconium oxide, tantalum oxide, or combinations thereof. According to one or more embodiments, the channel region CA may have a cylindrical shape. The channel region CA may include doped polysilicon or undoped polysilicon. According to one or more embodiments, the buried insulating film BUIF may fill the interior space of the channel region CA. The buried insulating film BUIF may include an insulating material. For example, the buried insulating film BUIF may include silicon oxide, silicon nitride, silicon oxynitride, or combinations thereof. In some one or more embodiments, the buried insulating film BUIF may be omitted, in which case the channel region CA may have a pillar structure without internal space.

Thereafter, a middle insulating film MDIF covering the plurality of channel hole-burying structures, the step-like structure STC, and the insulating block IB may be formed over the memory cell region MEC, the connection region CON, and the peripheral circuit region PERI, a plurality of contact holes may be formed in the middle insulating film MDIF to expose upper surfaces of the plurality of channel hole-burying structures, and a plurality of drain areas DA may be formed in the plurality of contact holes to form a channel structure CS. The middle insulating film MDIF may be formed to have a planarized top surface spanning the memory cell region MEC, the connection region CON, and the peripheral circuit region PERI. According to one or more embodiments, the middle insulating film MDIF may include silicon oxide, silicon nitride, or silicon oxynitride. According to one or more embodiments, the drain area DA may include a doped polysilicon layer. The plurality of sacrificial layers may be replaced by a plurality of gate lines GL and a plurality of conductive pad regions CP.

Although not illustrated in FIG. 6, a plurality of word line cut trenches (not illustrated) may be formed that penetrate the plurality of insulating films IF and the plurality of sacrificial layers to expose the wafer W. The plurality of word line cut trenches (not shown) may be formed to extend lengthwise in the first horizontal direction X and cross the memory cell region MEC and the connection region CON.

According to one or more embodiments, the plurality of sacrificial layers exposed through the plurality of word line cut trenches (not shown) are selectively removed to create a space between each of the plurality of insulating films IF, and then a conductive material is filled in the space to form a plurality of gate stacks GS. According to one or more embodiments, the plurality of gate stacks GS may include a metal, a metal silicide, a doped semiconductor, or combinations thereof. For example, each of the plurality of gate stacks GS may include a metal such as tungsten, nickel, cobalt, tantalum, or the like, a metal silicide such as tungsten silicide, nickel silicide, cobalt silicide, tantalum silicide, or the like, doped polysilicon, or combinations thereof.

According to one or more embodiments, the plurality of gate stacks GS may include the plurality of gate lines GL and the plurality of conductive pad regions CPR integrally connected to the plurality of gate lines GL. According to one or more embodiments, the plurality of conductive pad regions CPR on the connection region CON may form the step-like structure STC. According to one or more embodiments, a portion of the gate stack GS disposed on the memory cell region MEC may form a memory stack MST. For example, the memory stack MST may include, but is not limited to, 48 to 128 gate lines stacked in the vertical direction Z. The plurality of gate lines GL included in the gate stack GS are arranged on the memory cell region MEC and extend in the horizontal direction parallel to the upper surface of the wafer W and may overlap each other in the vertical direction Z. According to one or more embodiments, the plurality of gate lines GL may include the plurality of word lines WL: WL1, WL2, ..., WLn-1, WLn, the at least one ground select line GSL, and the at least one string select line SSL. FIG. 6 illustrates an example in which the plurality of gate lines GL include two ground select lines GSL and two string select lines SSL, but the technical idea of the disclosure is not limited thereto.

After forming an upper insulating film UPIF, a plurality of bit line contact pads BLCP that penetrate the upper insulating film UPIF in the memory cell region MEC and are connected to a plurality of channel structures CS may be formed. The insulating block IB, the middle insulating film MDIF, and the upper insulating film UPIF may form an insulating structure INS. According to one or more embodiments, the plurality of bit line contact pads BLCP may be mutually insulated by the upper insulating film UPIF. The plurality of bit line contact pads BLCP may include metal, metal nitride, or a combination thereof. According to one or more embodiments, each of the upper insulating film UPIF may include an oxide film, a nitride film, or a combination thereof.

A metal silicide film MSF may be formed on a surface of the conductive pad region CPR exposed through each of a plurality of first contact holes on the connection region CON, and a contact structure CTS may be formed on the metal silicide film MSF inside each of the plurality of first contact holes. The method S1 described with reference to FIG. 1 may be performed before or after forming the contact structure CTS inside each of the plurality of first contact holes. That is, the plurality of first contact holes may correspond to one of the hole areas inspected by the method S1 in FIG. 1. The plurality of first contact holes may be defined as region B.

For example, the contact structure CTS may include a contact plug CTP extending in the vertical direction Z and in contact with the metal silicide film MSF, and an insulating plug IP surrounding the contact plug CTP. In addition, a peripheral insulating plug PIP and a peripheral contact plug PCP may be sequentially formed within a plurality of second contact holes on the peripheral circuit region PERI to form a peripheral contact structure PTS. The method S1 described with reference to FIG. 1 may be performed before or after forming the peripheral contact structure PTS inside each of the plurality of second contact holes. That is, the plurality of second contact holes may correspond to one of the hole areas inspected by the method S1 in FIG. 1. The plurality of second contact holes may be defined as region C.

According to one or more embodiments, the insulating plug IP and a peripheral insulating plug CIP may each include a silicon nitride film, a silicon oxide film, or a combination thereof. According to one or more embodiments, the contact plug CTP and the peripheral contact plug PCP may each include tungsten, titanium, tantalum, copper, aluminum, titanium nitride, tantalum nitride, tungsten nitride, or combinations thereof. According to one or more embodiments, the metal silicide film MSF may include WSi, WSiN, WSiO, or combinations thereof. The terms "WSi", "WSiN", and "WSiO" used in this specification mean materials composed of the elements included in each term, and are not chemical formulas representing stoichiometric relationships.

In an embodiment, after forming an interlayer insulating film ILIF covering the resultant on the memory cell region MEC, the connection region CON, and the peripheral circuit region PERI, the plurality of bit lines BL, a plurality of wiring layers ML and a plurality of peripheral wiring layers PML penetrating through some portions of the interlayer insulating film ILIF may be formed.

According to one or more embodiments, the drain area DA of each of the plurality of channel structures CS may be connected to a corresponding one of the plurality of bit lines BL through a bit line contact pad BLCP. According to one or more embodiments, the plurality of bit lines BL may be mutually insulated by the interlayer insulating film ILIF. According to one or more embodiments, the plurality of bit lines BL may include metal, metal nitride, or a combination thereof. For example, the plurality of bit lines BL may include tungsten, titanium, tantalum, copper, aluminum, titanium nitride, tantalum nitride, tungsten nitride, or combinations thereof. According to one or more embodiments, the interlayer insulating film ILIF may include an oxide film, a nitride film, or a combination thereof.

According to one or more embodiments, the plurality of wiring layers ML may be formed at the same level as the plurality of bit lines BL arranged on the memory cell region MEC. According to one or more embodiments, each of the plurality of wiring layers ML may be connected to the contact plug CTP of the contact structure CTS. According to one or more embodiments, each of the plurality of wiring layers ML may be configured to be electrically connectable to one conductive pad region CPR selected from among the plurality of conductive pad regions CP via one contact plug CTP selected from among a plurality of contact plugs CTP. According to one or more embodiments, the plurality of wiring layers ML may not include a portion that vertically overlaps the memory stack MST. According to one or more embodiments, the plurality of wiring layers ML on the connection region CON may be insulated from each other by the interlayer insulating film ILIF. According to one or more embodiments, the plurality of wiring layers ML may include tungsten, titanium, tantalum, copper, aluminum, titanium nitride, tantalum nitride, tungsten nitride, or combinations thereof.

According to one or more embodiments, the plurality of peripheral wiring layers PML may extend horizontally at the same level as a level of the plurality of wiring layers ML formed in the connection region CON. According to one or more embodiments, each of the plurality of peripheral wiring layers PML may be connected, via one of a plurality of peripheral contact plugs PCP, to either the peripheral gate PG or the peripheral source/drain area PSD. At least some of the plurality of peripheral wiring layers PML may be configured to be connected to other circuitry or wiring disposed on the peripheral circuit region PERI. The plurality of peripheral wiring layers PML may be mutually insulated by the interlayer insulating film ILIF. According to one or more embodiments, each of the plurality of peripheral wiring layers PML may include tungsten, titanium, tantalum, copper, aluminum, titanium nitride, tantalum nitride, tungsten nitride, or combinations thereof.

Hereinafter, a process of performing inspection and measurement on the region A will be described in detail. However, as mentioned above, the method S1 of FIG. 1 may be performed not only for the region A, but also for the regions B and C, and may be extended to cases where the semiconductor device is dynamic random-access memory (DRAM). That is, the method described herein may be applied to the analysis of any form of vertical hole that passes through a plurality of layers, such as a channel hole or a contact hole.

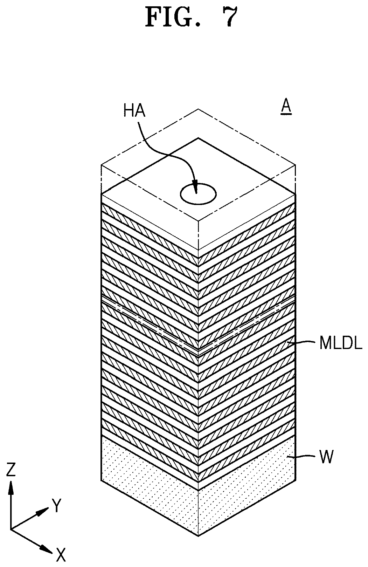

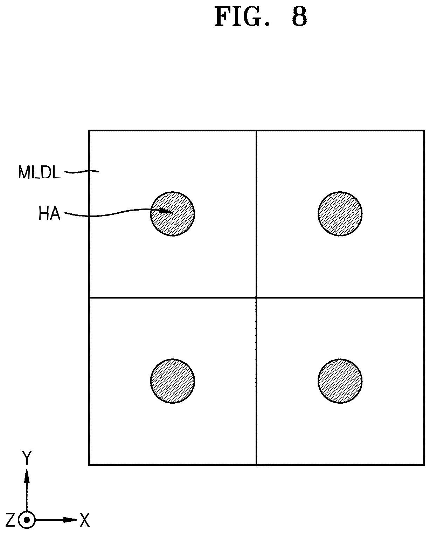

FIG. 7 is a enlarged perspective view showing the region A of FIG. 6. FIG. 8 is a plan view illustrating a semiconductor device from the perspective of a vertical axis according to an embodiment.

FIGS. 7 and 8 are referenced together with FIGS. 1 to 4. A molding layer MLDL may be formed on the wafer W. The molding layer MLDL may be, but is not limited to, one of a gate stack GS, the step-like structure STC, and the insulating block IB of FIG. 6, and may be configured to surround first contacts, second contacts, or the channel structure CS. That is, in the case of FIG. 7, only the region A among the regions A, B, and C is enlarged, so the molding layer MLDL may correspond to the plurality of gate stacks GS.

The hole area HA may be formed inside the molding layer MLDL. In a vertical view, the cross-section of the hole area HA is depicted as circular, but the shape of the cross-section of the hole area HA is not limited to this and may be elliptical or rectangular. The vertical length of the molding layer MLDL may vary depending on the number of gate stacks deposited. As an embodiment, when a thickness of the ground select line GSL is about 15 nm, a thickness of the insulating film IF is about 25 nm, and the ground select line GSL and the insulating film IF are stacked in 75 layers, a vertical length of the molding layer MLDL may be 3 µm. In an embodiment, a length of each side in the horizontal direction of the molding layer MLDL may be from about 0.5 µm to about 1.5 µm.

In an embodiment, the diameter of the hole area HA may be from about 100 nm to about 500 nm. In an embodiment, the diameter of the hole area HA may be within a range of about 100 nm to about 5000 nm, which is the diameter of the area where the tip 221 of FIG. 4 comes into contact with the semiconductor device.

The molding layer MLDL may be a region that forms a periphery of a high aspect ratio contact (HARC) structure having a vertical length that is greater in comparison to a horizontal cross-sectional area. In certain embodiments, a high aspect ratio contact structure may be a contact structure having a high aspect ratio. A high aspect ratio may be an aspect ratio of at least 10:1. More preferably, the aspect ratio may be at least 30:1 or at least 40:1, and in ultra-high aspect ratio applications, the ratio may exceed 100:1. The hole area HA may correspond to a contact area included in the HARC structure.

When viewed along a vertical axis, a plurality of molding layers MLDL may be arranged. The plurality of molding layers MLDL may be in contact with each other. Although each molding layer MLDL is shown as having a hole area HA formed therein, the molding layer MLDL may not have the hole area HA formed therein. The area illustrated in FIG. 8 may correspond to a boundary between semiconductor devices.

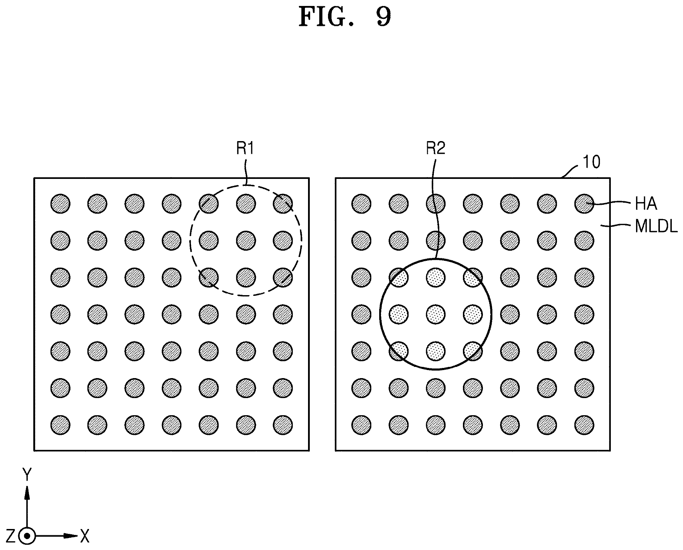

FIG. 9 is a plan view illustrating a semiconductor device from the perspective of a vertical axis according to an embodiment.

FIGS. 9 is referenced together with FIGS. 6 to 8. A reference measurement region R1 of the semiconductor device 10 located on the left side of FIG. 9 may correspond to a reference region for comparison with a measurement value of the target structure. An actual measurement region R2 of the semiconductor device 10 located on the right side of FIG. 9 may be a measurement region corresponding to the target structure. The semiconductor device 10 on the left and the semiconductor device 10 on the right may be the same or different from each other. That is, the reference measurement region R1 for measuring the reference signal may perform measurement not only in the semiconductor device 10 that includes the actual target structure, but also in another semiconductor device 10 that does not include the target structure. The reference measurement region R1 may be a region within a semiconductor device that is confirmed or expected to have no defects. In the semiconductor device 10, a plurality of hole areas HA may be regularly arranged in a planar manner, and the outer surface of each hole area HA may be surrounded by the molding layer MLDL.

The reference measurement region R1 and the actual measurement region R2 may have the same width in a planar direction. Each of the reference measurement region R1 and the actual measurement region R2 may be measured while being physically contacted by a plurality of tips.

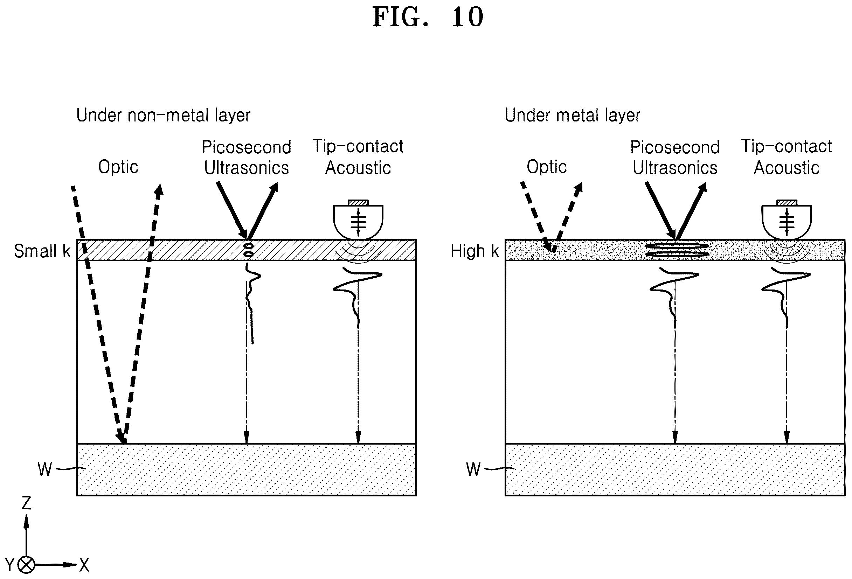

FIG. 10 is a conceptual diagram illustrating various types of inspection of a semiconductor device according to an embodiment.

Referring to FIG. 10, the wafer W is provided, a semiconductor device may be disposed on an upper surface of the wafer W, and various film materials may be formed on the upper surface of the semiconductor device. In an embodiment, in the left diagram of FIG. 10, the upper surface of the semiconductor device may include a non-metallic material and may have a relatively low absorption coefficient k compared to the upper surface in the right diagram. In an embodiment, in the right diagram of FIG. 10, the upper surface of the semiconductor device may include a metallic material and may have a relatively high absorption coefficient k compared to the upper surface in the left diagram. The absorption k of FIG. 10 may correspond to a refractive index.

In inspecting a semiconductor stack structure, the measurement may be performed by irradiating light or by irradiating picosecond ultrasonic waves. For instance, acoustic waves may be generated through a "pump" laser which causes thermal expansion within the semiconductor device, inducing acoustic waves. Alternatively, as in the disclosure, the ultrasonic waves for inspection may be generated by the transducer physically contacting the upper surface of the semiconductor device and applying vibration (tip-contact acoustic) to the semiconductor device.

Measurement equipment such as reflectometry and ellipsometry, which utilize light, may obtain information on 3D structural changes inside a stack structure of the semiconductor device because light may sufficiently penetrate the stack structure of the semiconductor device when the upper surface thereof is made of a medium with low absorption coefficient, as shown in the diagram on the left. However, in the case of picosecond ultrasonic, which generates ultrasonic waves by modulating a degree of absorption by applying optical pulse signals, generation of an ultrasonic signal with sufficient intensity may not be successful with a medium with low absorption coefficient.

On the other hand, in the case of the semiconductor device having an upper surface formed of a metallic material with high absorption coefficient, as shown on the right, light may not penetrate downward. Accordingly, it may not be possible to obtain 3D structural information below the upper surface formed of the metallic material. However, in the case of picosecond ultrasonic, since the wavelength is significantly absorbed in a material with a high absorption coefficient, a strong ultrasonic signal may be generated, and inspection of the semiconductor device may be performed using this signal.

In the case of the disclosure, it may be possible to measure 3D structural changes in a lower portion regardless of the material type of the upper layer of the semiconductor device. More specifically, the system for inspecting semiconductor devices according to the disclosure may deliver ultrasonic waves throughout the entire stack regardless of the absorption coefficient of the semiconductor device, by having the transducer substantially contact the upper surface of the semiconductor device.

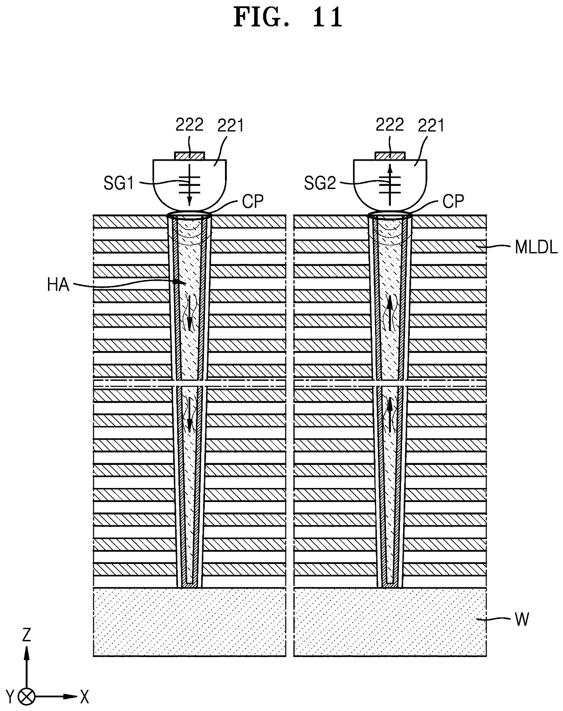

FIG. 11 is a conceptual diagram illustrating the inspection of a semiconductor device using a system for inspecting semiconductor devices according to an embodiment.

Referring to FIG. 11, the tip 221, which is the signal transmission portion, may physically contact the upper surface of the semiconductor device, and the tip 221 and the hole area HA of the semiconductor device may contact each other at a contact point CP. Although the diameter of the contact point CP is illustrated as corresponding to the diameter of the uppermost surface of the hole area HA, the diameter of the contact point CP may be less than that of the hole area HA. The contact point CP may be formed not only on an upper surface of the hole area HA but also on a partial area of an upper surface of the molding layer MLDL.

The tip 221 may physically contact the upper surface of the semiconductor device 10 at the hole area HA, and may apply vibration to the semiconductor device 10 to generate the pulse SG, which is the first signal. The pulse SG1 may descend in the depth direction through the stack structure and reach the upper surface of the wafer W.

The upper surface of the wafer W may reflect the pulse SG1 as the first signal and form the echo SG2 as the second signal. The echo SG2 may ascend in the depth direction through the stack structure and reach an upper surface of the hole area HA. The echo SG2 that reaches the upper surface of the hole area HA may arrive at the transducer 222.

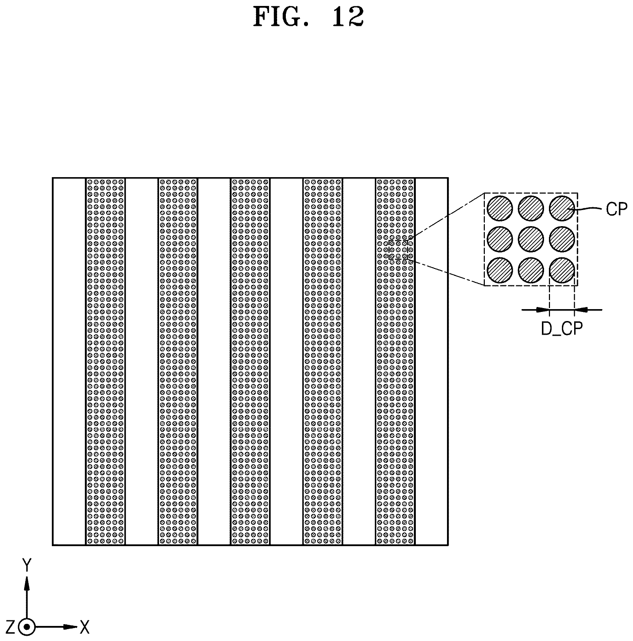

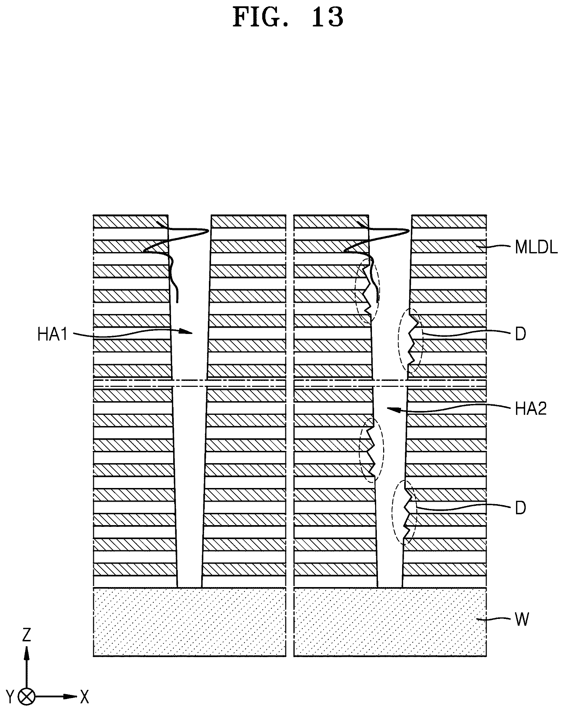

FIG. 12 is a plan view showing a bottom surface of a system for inspecting semiconductor devices according to an embodiment. FIG. 13 is a conceptual diagram illustrating inspection of a semiconductor device according to an embodiment.

FIGS. 12 and 13 are referenced together. Referring to FIG. 12, the bottom surface of the system for inspecting semiconductor devices is illustrated, which corresponds to an area in contact with the upper surface of the semiconductor device. The bottom surface of the system for inspecting semiconductor devices may have a plurality of contact points CP regularly arranged in the horizontal direction. The diameter D_CP of the contact point CP may be formed within a range of about 100 nm to about 5000 nm as described above. In conventional light-based metrology used to measure 3D structural profiles of 3D semiconductor devices, there is a limitation in that only averaged 3D structural data of a plurality of units located within several tens of micrometers may be measured due to a limited beam size. Accordingly, the disclosure is configured to measure the 3D structural profiles on a unit-by-unit basis using the tip 221 having a smaller contact point CP. The tip 221 is replaceable depending on the diameter of the hole area HA of the semiconductor device.

Referring to FIG. 13, the hole area includes a first hole area HA1 having no defects D and a second hole area HA2 having defects D therein. While the pulses and the echo scan the inside of the hole area, information about the defect D may be included in the echo when a defect is present. In the case of the second hole area HA2, four defects D may be formed inside the hole area. The number, position, and shape of the formed defect(s) D are not limited to what is shown in the drawing.

Accordingly, the pulse and echo used to scan the first hole area HA1 and the second hole area HA2 may yield different results.

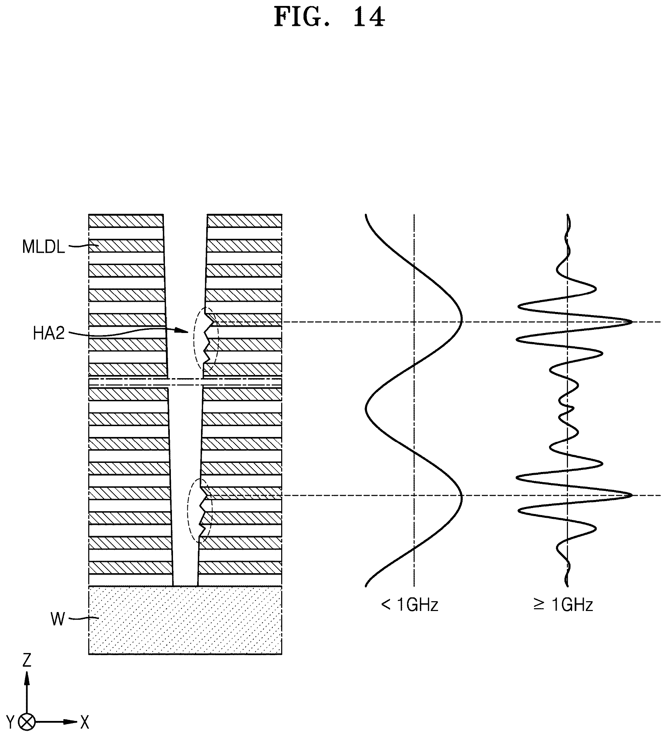

FIG. 14 is a conceptual diagram illustrating another inspection of a semiconductor device according to an embodiment.

Referring to FIG. 14, in inspecting the defects D of the second hole area HA2, the stack-type semiconductor device may be formed by stacking a plurality of layers, that is, a plurality of molding layers MLDL, as shown in FIG. 14, and may then form the 3D structure through etching or other methods. In this case, an abnormality in equipment performing the process on the semiconductor device may independently occur. Therefore, high-resolution ultrasonic waves are required to confirm that the semiconductor devices in the form of the stack are formed with a defect-free profile layer by layer. As the frequency of the vibration signal applied by the tip configured in the transducer increases, a resolution of the generated ultrasonic signal in the depth direction of the semiconductor device may be improved.

In an embodiment, when the frequency is 1 GHz, a peak may be formed over a relatively broad range in the vertical height direction where a defect exists. However, when the frequency exceeds 1 GHz, the peak may be formed in a relatively narrower range limited to the vertical height where the defect actually occurs, as compared to the left-side case. Accordingly, vertical structural defects of the semiconductor device stack may be detected and distinguished by using the transducer capable of vibrating the sample at a frequency of 1 GHz or higher. In an embodiment, the transducer forming the tip of the disclosure may apply physical vibration to the semiconductor device in a frequency range of about 1 GHz to about 50 GHz.

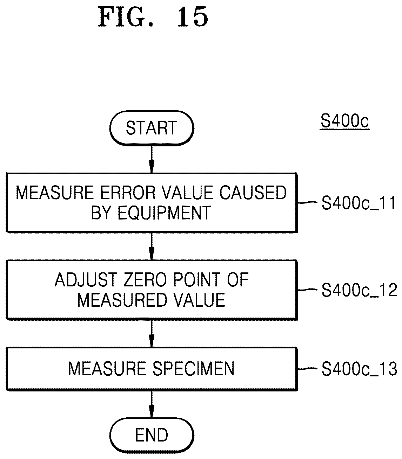

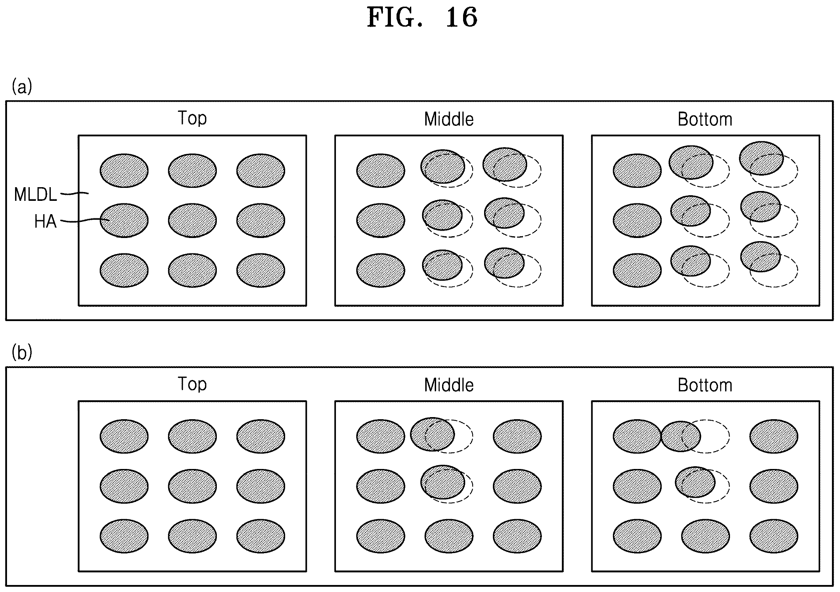

FIG. 15 is a detailed flowchart illustrating operations of measuring a target structure in FIG. 2 according to an embodiment. FIG. 16 is a conceptual diagram illustrating an inspection of a semiconductor device according to an embodiment in accordance with the flowchart of FIG. 15.

Referring to FIG. 15, operation S400c of measuring the target structure of the semiconductor device may include operation 400c_11 of measuring an error value caused by equipment, operation S400c_12 of adjusting a zero point of the measured value in operation S400c_11, and operation S400c_13 of re-measuring the specimen after the zero point is adjusted operation S400c_12. Adjusting a zero point may refer to calibrating the measured value (e.g., applying one or more offsets to the measured value).

Referring to FIG. 16 together with FIG. 15, the upper surface of the hole area HA surrounded by the molding layer MLDL is illustrated. In plan view, the measurement may be performed by at least nine or more of the transducers, and accordingly, the number of hole areas HA to be measured may also be nine or more. A drawing shown in box (a) is for explaining steps corresponding to operation S400c_11, which is for measuring error values caused by the equipment. Box (a) illustrates measured results at each vertical level of the semiconductor device stack. In an embodiment, in the top portion within box (a), corresponding measured result values may match the actual areas. In an embodiment, in the middle portion of the stack within box (a), some actual areas and measured result values may not match. More specifically, in the middle portion, dotted lines represent cross-sections of the actual hole areas for the vertical level, and hatched areas surrounded by solid lines represent measured values. Therefore, in the middle portion of the stack within box (a), it may be confirmed that error values caused by the measurement equipment occur in six out of nine hole areas HA. Such error values caused by the measurement equipment may correspond to errors caused by the equipment, not to a defect in the actual semiconductor device.

In an embodiment, in the bottom portion of the stack within box (a), as in the middle portion, measured result values may not match actual areas. More specifically, in the bottom portion, dotted lines may represent cross-sections of the actual hole areas for the vertical level, and hatched areas enclosed by solid lines may represent the measured values. Therefore, in the bottom portion of the stack within box (a), it may be confirmed that error values caused by the measurement equipment occur in six out of nine hole areas HA. Such error values may correspond to equipment-induced errors, not to defects in the actual semiconductor device. The error values occurring in the bottom portion may have a greater absolute value than the error values occurring in the middle portion.

In operation S400c_11, as described above, magnitudes and directions of error values caused by the equipment, which may result in measurements indicating defects even when no actual defect is present, may be measured. In operation S400c_12, the zero point may be adjusted based on the magnitude and direction of error values caused by the equipment.

The diagram shown in box (b) is provided to illustrate operation S400c_13, which involves measuring the specimen after the zero point is adjusted. Box (b) shows measured values for each vertical level of the semiconductor device stack. Therefore, unlike the measurement results for each vertical level of the semiconductor device stack in box (a), error values observed in box (b) may correspond to actual defects in the semiconductor device. In one example, measurement errors may have specific effects on the raw data (i.e. radio-frequency data).

In an embodiment, in the top portion of box (b), measured result values may match actual areas. In an embodiment, in the middle portion of the stack in box (b), dotted lines may indicate cross-sections corresponding to good hole areas or zero-adjusted values for the vertical level, and hatched areas enclosed by solid lines may represent measured values. Therefore, in the middle portion of the stack within box (b), it may be confirmed that actual defects occur in two out of nine hole areas HA of the semiconductor device stack. That is, compared to the area corresponding to a good hole, the cross-section may be shifted toward the upper left and may have a smaller diameter.

In an embodiment, in the bottom portion of the stack within box (b), as in the middle portion, dotted lines may indicate cross-sections corresponding to good hole areas or zero-adjusted values for the vertical level, and hatched areas enclosed by solid lines may represent the measured values. Therefore, in the bottom portion of the stack within box (b), it may be confirmed that actual defects occur in two out of nine hole areas HA of the semiconductor device stack. That is, compared to the area corresponding to a good hole, the cross-section may be shifted toward the upper left and may have a smaller diameter. Therefore, by integrating the measured values for each vertical level in box (b), inspection results for the internal structure or defects of the target semiconductor device may be derived.

In summary, when semiconductor fabrication processes are performed on the stack of a semiconductor device, an etching technique that forms hole areas by drilling (e.g., etching) them at once may be essential. In this case, the processes may need to proceed such that the processed stack units have identical profiles in order to be considered good quality. To verify whether the process was properly performed, 3D structure profiles of adjacent individual units may need to be compared. Therefore, the profiles for at least nine unit structures may be scanned using ultrasonic signals, and the results may be visualized. By obtaining multiple scanned ultrasonic signals, equipment-induced influences may be removed, enabling more accurate measurement of relative positional non-uniformities at specific heights of the individual units after zero-point adjustment.

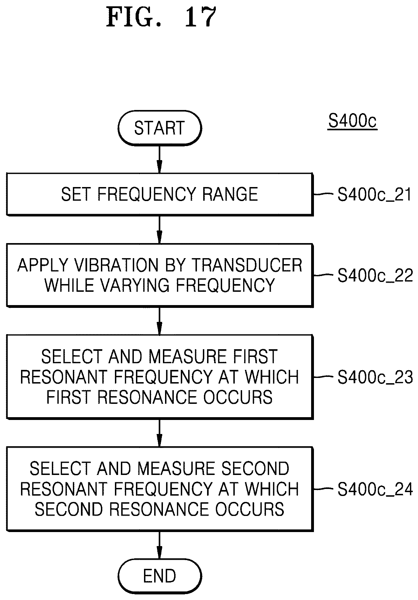

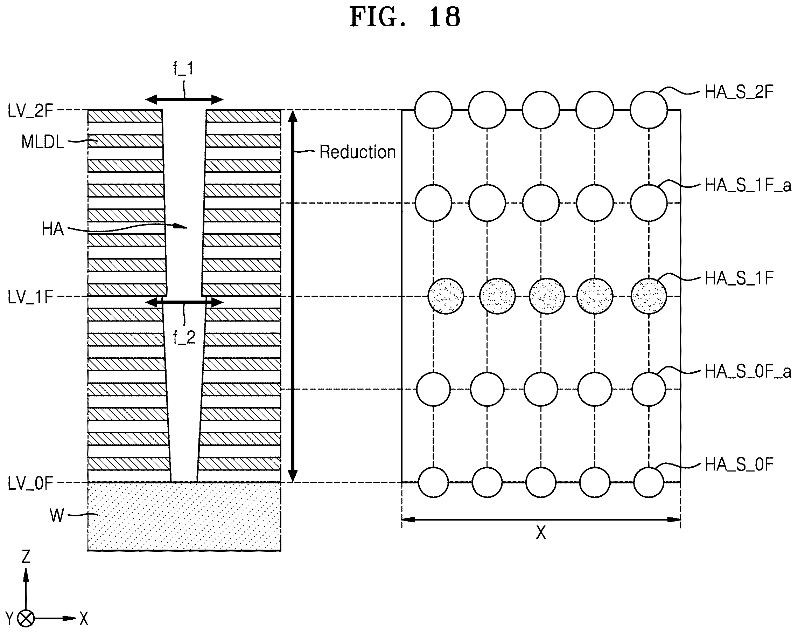

FIG. 17 is another detailed flowchart illustrating operations of measuring the target structure in FIG. 2 according to an embodiment. FIG. 18 is a conceptual diagram illustrating the inspection of a semiconductor device according to an embodiment in accordance with the flowchart of FIG. 17.

Referring to FIG. 17, operation S400c for measuring the target structure of the semiconductor device may include operation S400c_21 of setting a range of vibration frequencies of the transducer, operation S400c_22 of applying vibration to the semiconductor device by using the transducer while varying the frequency within the range set in operation S400c_21 (e.g., sweeping across the frequency range), operation S400c_23 of searching for a first resonance frequency at which resonance first occurs within the frequency range as the transducer applies the vibration to the semiconductor device, selecting the first resonance frequency, and performing the measurement, and operation S400c_24 of searching for a second resonance frequency at which a resonance next occurs within the frequency range, selecting the second resonance frequency, and performing the measurement.

Referring to FIG. 18, on the left side, the stack-type semiconductor device includes the plurality of molding layers MLDL is shown on the upper surface of the wafer W. That is, the semiconductor device may include at least one layer, and the hole area HA formed inside the semiconductor device may have a tapered shape in which the cross-sectional area in the horizontal direction gradually decreases along the vertical direction, and the tapered shape may be discontinuous at a certain vertical level. In an embodiment, the semiconductor device shown in FIG. 18 may include a ground layer LV_0F, a first layer LV_1F, and a second layer LV_2F as a topmost layer. From LV_2F to LV_1F, an inner surface of the hole area HA may have a continuously tapered shape. However, starting from LV_1F, a horizontal area of the hole area HA may be formed discontinuously. More specifically, the horizontal area of the hole area HA may increase discontinuously from LV_1F (e.g., there may be a step at LV_1F). In addition, from LV_1F to LV_0F, the side surfaces of the hole area HA may again have a continuously tapered shape. In summary, the inner surface of the hole area HA from LV_2F to LV_0F may not be conformal.

In FIG. 18, the graph shown to the right of the semiconductor device represents the horizontal direction on the X-axis and the depth direction of the semiconductor device on the Y-axis, where each circle in the graph represents a cross-section of the hole area at each vertical level. That is, a total of 25 data are shown for each of the five horizontal hole areas, which are cross sections of the five vertical hole areas.

Five cross-sections HA_S_2F of hole areas corresponding to the uppermost vertical level LV_2F, the second layer, are shown. Five cross-sections HA_S_1F_a of hole areas corresponding to the vertical level between LV_2F and LV_1F are shown. Five cross-sections HA_S_1F_b of hole areas corresponding to the vertical level of LV_1F are shown. Five cross-sections HA_S_0F_a of hole areas corresponding to the vertical level between LV_1F and LV_0F are shown. Finally, five cross-sections HA_S_0F of hole areas corresponding to the bottom ground layer LV_0F are shown. Diameters of the hole area cross-sections corresponding to each layer may differ from one another. In an embodiment, the diameter of HA_S_2F may be greater than that of HA_S_1F_a. In an embodiment, the diameter of HA_S_1F may be greater than the diameters of HA_S_0F_a and HA_S_0F.

In the case of HA_S_1F, it may correspond to a vertical level where periodicity of the repeated structure is broken, and it may be located at a horizontal position different from that of other hole area cross-sections. Alternatively, HA_S_1F may be located at the same horizontal position as other hole area cross-sections, but the variation in cross-sectional diameter with respect to the vertical level may differ.

In the case of the stack of the semiconductor device in which a plurality of layers are vertically stacked, the units having identical 3D profiles may be arranged repeatedly in the planar direction. Even when the transducer with a small contact area is used, signals may be modulated due to interactions between the ultrasonic waves generated by the transducer and the individual units located around the target to be measured. In such a case, when the frequency of the mechanically vibrating tip of the transducer is similar to the periodicity of the repeated units, a resonance phenomenon may occur. That is, the resonance frequencies described in operations S400c_23 and S400c_24 may occur. Therefore, when the ultrasonic waves are generated at the frequency at which a resonance phenomenon occurs with the repeated structure at a specific height, while varying the frequency within the set frequency range, the ultrasonic signal may significantly change near the area of an individual unit where the periodicity of the structure is broken. In the disclosure, the area where the periodicity is broken may correspond to an area near LV_1F. In an embodiment, a resonance phenomenon may occur between LV_2F and LV_1F by a first resonance frequency f_1. In an embodiment, a resonance phenomenon may occur between LV_1F and LV_0F by a second resonance frequency f_2. The first resonance frequency f_1 and the second resonance frequency f_2 may have different magnitudes. That is, when the periodicity of the individual units or the diameter of hole area cross-sections differs between the upper and lower parts, the resonance frequency may be configured differently for the individual units in each layer where such a periodicity mismatch occurs in the depth direction. Accordingly, based on the difference between the resonance frequencies, the aperiodicity of the individual units may be extracted. In other words, the signal processing unit 300 of FIG. 4 may extract the horizontal structure according to the vertical position of the semiconductor device, based on measurement values obtained from each of the first resonance frequency and the second resonance frequency. The intensity of ultrasonic waves may be progressively reduced in the downward vertical direction. In the disclosure, the intensity of ultrasonic waves may correspond to the magnitude of the amplitude of the ultrasonic waves.

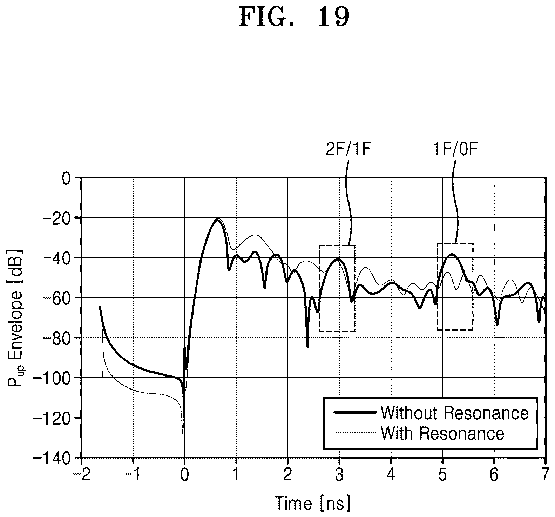

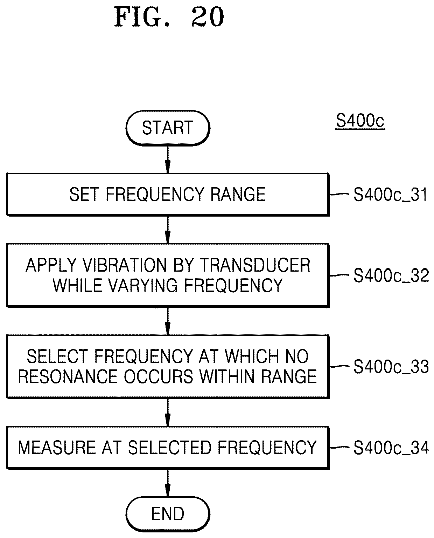

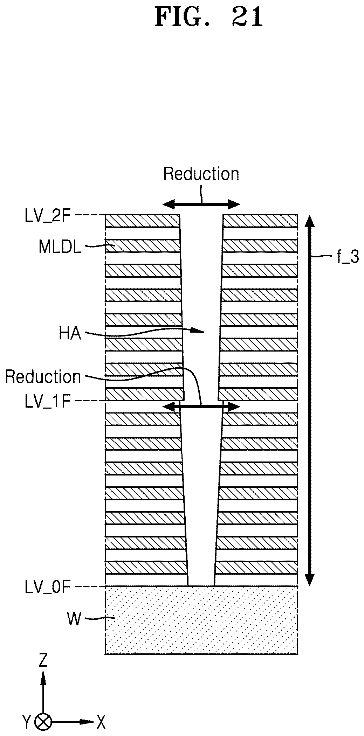

FIG. 19 is a graph showing decibel values over time during an inspection of a semiconductor device according to an embodiment. FIG. 20 is another detailed flowchart illustrating operations of measuring the target structure in FIG. 2 according to an embodiment. FIG. 21 is a conceptual diagram illustrating an inspection of a semiconductor device according to the flowchart of FIG. 20 according to an embodiment.

FIGS. 19 to 21 are referenced together. Operation S400c for measuring the target structure of the semiconductor device may include operation S400c_31 of setting a range of vibration frequencies of the transducer, operation S400c_32 of applying vibration to the semiconductor device by using the transducer while varying the frequency within the range set in operation S400c_31, operation S400c_33 of searching for a frequency at which no resonance occurs within the frequency range as the transducer applies the vibration to the semiconductor device, selecting a non-resonant frequency, and operation S400c_34 of performing the measurement with the non-resonant frequency. The frequency selected in the S400c_33 operation may be f_3 of FIG. 21. A non-resonant frequency may be a frequency that is sufficiently spectrally spaced from a resonant frequency of the structure such that an induced vibrational amplitude of the structure at said frequency is attenuated below a predetermined threshold relative to a peak amplitude at the resonant frequency. For instance, a non-resonant frequency may be a frequency that lies outside a frequency bandwidth defined by a full width at half maximum (FWHM) of a resonance peak associated with a geometric dimension of the structure. Other definitions may be possible.

Referring to FIG. 19, data without resonance and data with resonance are shown. When viewing the data after 0 nanoseconds from the start of measurement, it may be seen that signals with greater amplitude are detected in the space between the second layer and the first layer, that is, from LV_2F to LV_1F, in the case without resonance compared to the case with resonance. It may also be seen that in the space between the first layer and the ground layer, that is, from LV_1F to LV_0F, a signal with a greater amplitude is detected in the case without resonance compared to the case with resonance.

In a semiconductor device including a plurality of layers with a high stack structure, it may be necessary to precisely measure the depth of a hole area, such as the value of total recess, the total thickness of the stack, and the extent to which the hole is formed in the layers of the stack. However, due to the planar shape of a unit at a given depth and the influence of signals from surrounding units, the generated ultrasonic signal may be distorted in terms of depth information. That is, as observed in FIG. 18, as it goes deeper in the vertical direction, which is the depth direction, the amplitude of the ultrasonic signal may become weaker, and as a result, distortion in the depth information of the hole area may further occur. Therefore, as described in FIGS. 19 to 21, a frequency insensitive to structural changes of each layer in the depth direction may be selected. In the disclosure, the insensitive frequency may correspond to a frequency at which no resonance occurs. Based on structural information of layers in the depth direction, the frequency at which resonance does not occur due to a planar repetitive structure of the stack of the semiconductor device may be selected. Based on measurement values obtained at the non-resonant frequency by the signal processing unit 300 of FIG. 4, a vertical structure according to a horizontal position may be extracted.

Compared with FIG. 18, the intensity of ultrasonic wave in FIG. 21 may be reduced at each different vertical level. In other words, the intensity of ultrasonic waves may be primarily attenuated at LV_2F and may be secondarily attenuated at LV_1F.

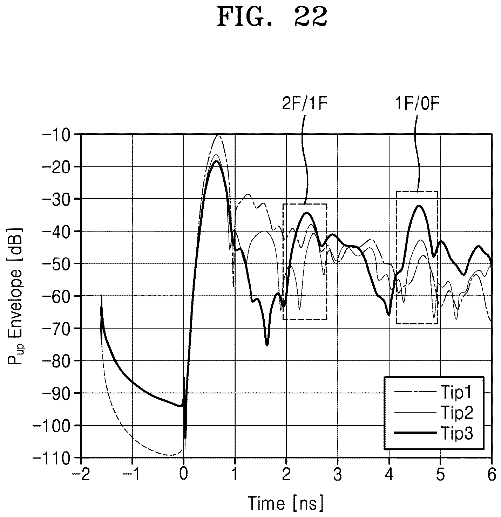

FIG. 22 is a graph showing decibel values over time during an inspection of a semiconductor device according to an embodiment.

Referring to FIG. 22, data measured by different tips are shown. The tip 221 may be configured to be replaceable. A plurality of tips may differ in size, arrangement, spacing, and constituent materials. The plurality of tips may be sequentially applied to a single semiconductor device to select a tip suitable for measurement. Sensitivity to the ultrasonic signal may vary depending on a shape of the tip contacting the individual unit. Accordingly, in the disclosure, grouping of the tips may be first performed based on 3D shape information of the structure of a semiconductor device to be measured, as described above. Subsequently, by selecting a tip corresponding to a target layer from the grouped tips, changes in a 3D profile of the target structure may be measured with high sensitivity. In an embodiment, measurement information obtained by a first tip Tip1, a second tip Tip2, and a third tip Tip3 is examined.

In a region between the second layer and the first layer, that is, in a space from LV_2F to LV_1F, and in a region between the first layer and the ground layer, that is, in a space from LV_1F to LV_0F, it may be observed that the signal of the third tip Tip3 has a greater amplitude than signals from the other tips. Therefore, in an embodiment, the third tip may be selected and measurement may be repeatedly performed. That is, the tip that provides the strongest (e.g., greatest amplitude) returned signals may be selected.

While the selection of tips may be implemented through either real-wolrd measurements or simulated measurements. Accordingly, a tip may be selected based ultrasonic signal simulation of signal transmission for each of the tips. The tip that provides the strongest measured signal for the structure (e.g., as determined through simulation) may be selected.

FIG. 23 is another detailed flowchart illustrating the measuring of the target structure in FIG. 2 according to an embodiment. FIG. 24 is a conceptual diagram illustrating an inspection of a semiconductor device according to an embodiment in accordance with the flowchart of FIG.23.

Referring to FIGS. 23 and 24, the operation S400c of measuring the target structure of a semiconductor device may include operation S400c_41 of securing a database of (e.g., accessing, receiving or obtaining) pulse trains including multiple pulses, operation S400c_42 of measuring the pulse train for a specimen, operation S400c_43 of selecting at least one filter corresponding to the specimen from the database, and operation S400c_44 of applying the filter selected in operation S400c_43 and removing noise. In the disclosure, the ultrasonic signal may include multiple pulses, such as a first pulse P1 and a second pulse P2, as shown in FIG. 24. The multiple pulses may form the pulse train PT. After obtaining a database of the pulse trains in operation S400c_41, a measurement with the pulse train may be performed to the structure through operation S400c_42 as shown in FIG. 24.

At least one filter selected in operation S400c_43 may correspond to a first filter FTR1 and a second filter FTR2 of FIG. 24. The number of filters may correspond to the number of pulses included in the pulse train.

Through operation S400c_44, noise may be removed by applying the first filter FTR1 to the first pulse P1 and by applying the second filter FTR2 to the second pulse P2. By applying the first filter FTR1 to the first pulse P1, a first result value Result1 from which noise has been removed may be obtained. In addition, by applying the second filter FTR2 to the second pulse P2, a second result value Result2 from which noise has been removed may be obtained. That is, for each of the plurality of pulses in the pulse train, a corresponding filter may be applied.

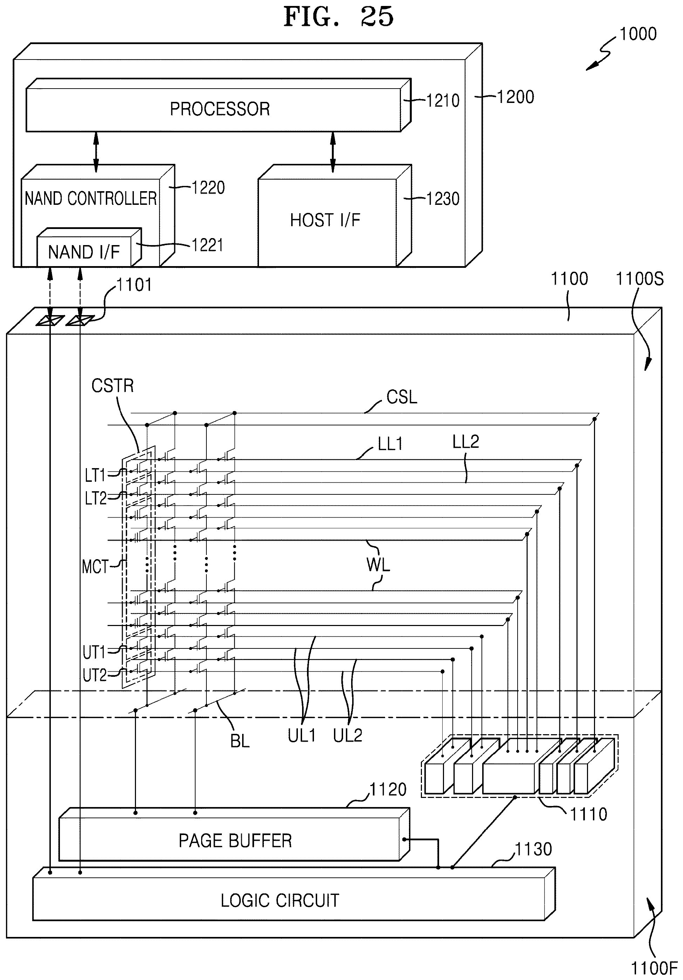

FIG. 25 is a diagram schematically illustrating an electronic system including a semiconductor device according to an embodiment.

Referring to FIG. 25, an electronic system 1000 may include one or more memory devices 1100 and a memory controller 1200 electrically connected to the one or more memory devices 1100. The electronic system 1000 may be, for example, a solid state drive (SSD) device, a universal serial bus (USB), a computing system, a medical device, or a communication device including at the one or more memory devices 1100.

The memory device 1100 may be an integrated circuit device including a nonvolatile memory device. For example, the memory device 1100 may include the semiconductor device 10 described with reference to FIG. 6. The memory device 1100 may include a first structure 1100F and a second structure 1100S on the first structure 1100F. The first structure 1100F may be a peripheral circuit structure. The peripheral circuit may include a row decoder 1110, a page buffer 1120, and a logic circuit 1130.

The second structure 1100S may be a cell array structure. The second structure 1100S may include the plurality of bit lines BL, a common source line CSL, the plurality of word lines WL, a plurality of first and second string select lines UL1 and UL2, first and second ground select lines LL1 and LL2, and a plurality of memory cell strings CSTR between the plurality of bit lines BL and the common source line CSL. Gate electrodes and channel structures may form the plurality of memory cell strings CSTR.

In the second structure 1100S, each of the plurality of memory cell strings CSTR may include ground select transistors LT1 and LT2 adjacent to the common source line CSL, string select transistors UT1 and UT2 adjacent to the bit line BL, and a plurality of memory cell transistors MCT disposed between the ground select transistors LT1 and LT2 and the string select transistors UT1 and UT2. The numbers of ground select transistors LT1 and LT2 and the string select transistors UT1 and UT2 may vary depending on one or more embodiments. One of the plurality of channel structures and one of the plurality of gate electrodes may form one of the plurality of transistors LT1, LT2, UT1, UT2, and MCT.

In one or more embodiments, a plurality of ground select lines LL1 and LL2 may each be connected to gate electrodes of ground select transistors LT1 and LT2. A word line WL may be connected to a gate electrode of a memory cell transistor MCT. Each of the plurality of string select lines UL1 and UL2 may be connected to gate electrodes of string select transistors UT1 and UT2.

A common source line CSL, the plurality of ground select lines LL1 and LL2, the plurality of word lines WL, and the plurality of string select lines UL1 and UL2 may be connected to the row decoder 1110. The plurality of bit lines BL may be electrically connected to the page buffer 1120.

The memory device 1100 may communicate with a memory controller 1200 through an external connection pad 1101 electrically connected to a logic circuit 1130. The external connection pad 1101 may be electrically connected to the logic circuit 1130.

The memory controller 1200 may include a processor 1210, a Not AND (NAND) controller 1220, and a host interface 1230. In some one or more embodiments, the electronic system 1000 may include a plurality of memory devices 1100, and in this case, the memory controller 1200 may control the plurality of memory devices 1100.

The processor 1210 may control overall operations of the electronic system 1000 including the memory controller 1200. The processor 1210 may operate according to predetermined firmware and may access the memory device 1100 by controlling the NAND controller 1220. The NAND controller 1220 may include a NAND interface 1221 for processing communication with the memory device 1100. Through the NAND interface 1221, control commands for controlling the memory device 1100, data to be written to the plurality of memory cell transistors MCT of the memory device 1100, and data to be read from the plurality of memory cell transistors MCT of the memory device 1100 may be transmitted. The host interface 1230 may provide a communication function between the electronic system 1000 and an external host. When a control command is received from the external host through the host interface 1230, the processor 1210 may control the memory device 1100 in response to the control command.

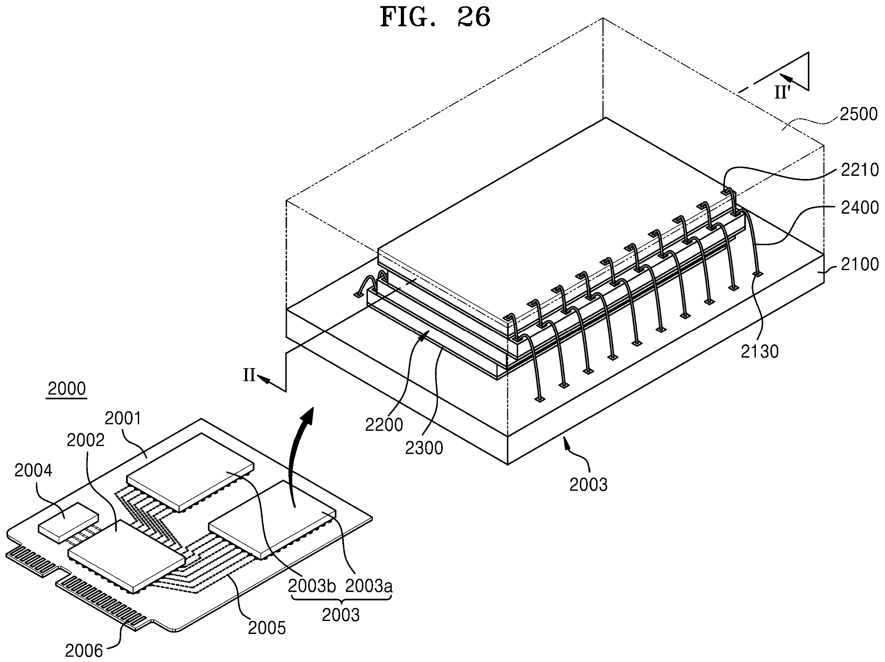

FIG. 26 is a perspective view illustrating an electronic system including a semiconductor device according to an embodiment.

Referring to FIG. 26, an electronic system 2000 according to an embodiment may include a main board 2001, a memory controller 2002 mounted on the main board 2001, one or more semiconductor packages 2003, and a DRAM 2004. The semiconductor package 2003 and the DRAM 2004 may be interconnected with the memory controller 2002 via multiple wiring patterns 2005 formed on the main board 2001.

The main board 2001 may include a connector 2006 having a plurality of pins coupled to the external host. The number and arrangement of the multiple pins in the connector 2006 may vary depending on a communication interface between the electronic system 2000 and the external host. In one or more embodiments, the electronic system 2000 may communicate with an external host according to any one of the interfaces such as USB, peripheral component interconnect (PCI) Express, serial advanced technology attachment (SATA), or M-Phy for universal flash storage (UFS). In one or more embodiments, the electronic system 2000 may operate by power supplied from the external host through the connector 2006. The electronic system 2000 may further include a power management integrated circuit (PMIC) for distributing power supplied from the external host to the memory controller 2002 and the semiconductor package 2003.

The memory controller 2002 may write data to the semiconductor package 2003 or read data from the semiconductor package 2003, and may improve an operating speed of the electronic system 2000.

The DRAM 2004 may be a buffer memory for alleviating a speed difference between the data storage space of the semiconductor package 2003 and the external host. The DRAM 2004 included in the electronic system 2000 may operate as a kind of cache memory and may provide a space for temporarily storing data during control operations for the semiconductor package 2003. When the electronic system 2000 includes the DRAM 2004, the memory controller 2002 may further include a DRAM controller for controlling the DRAM 2004 in addition to the NAND controller for controlling the semiconductor package 2003.

The semiconductor package 2003 may include a first semiconductor package 2003a and a second semiconductor package 2003b spaced apart from each other. Each of the first and second semiconductor packages 2003a and 2003b may be the semiconductor package including a plurality of semiconductor chips 2200. Each of the first and second semiconductor packages 2003a and 2003b may include a package substrate 2100, the plurality of semiconductor chips 2200 on the package substrate 2100, an adhesive layer 2300 disposed on a lower surface of each of the plurality of semiconductor chips 2200, connection structures 2400 electrically connecting the plurality of semiconductor chips 2200 to the package substrate 2100, and a molding layer 2500 covering the plurality of semiconductor chips 2200 and the connection structures 2400 on the package substrate 2100.

The package substrate 2100 may be a printed circuit board including a plurality of package upper pads 2130. Each of the plurality of semiconductor chips 2200 may include an input/output pad 2210. Each of the plurality of semiconductor chips 2200 may include the semiconductor device 10 described with reference to FIG. 6.

In one or more embodiments, the connection structure 2400 may be bonding wire electrically connecting the input/output pad 2210 and the package upper pad 2130. Thus, in the first and second semiconductor packages 2003a and 2003b, the plurality of semiconductor chips 2200 may be electrically connected to each other in a wire-bonding manner and may be electrically connected to the package upper pads 2130 of the package substrate 2100. In one or more embodiments, in the first and second semiconductor packages 2003a and 2003b, the plurality of semiconductor chips 2200 may be electrically connected to each other by a connection structure including a plurality of through silicon vias (TSVs) instead of the bonding wire connection structure 2400.

In one or more embodiments, the memory controller 2002 and the plurality of semiconductor chips 2200 may be included in a single package. In an embodiment, the memory controller 2002 and the plurality of semiconductor chips 2200 may be mounted on an interposer substrate separate from the main board 2001, and may be connected to each other through wiring formed on the interposer substrate.

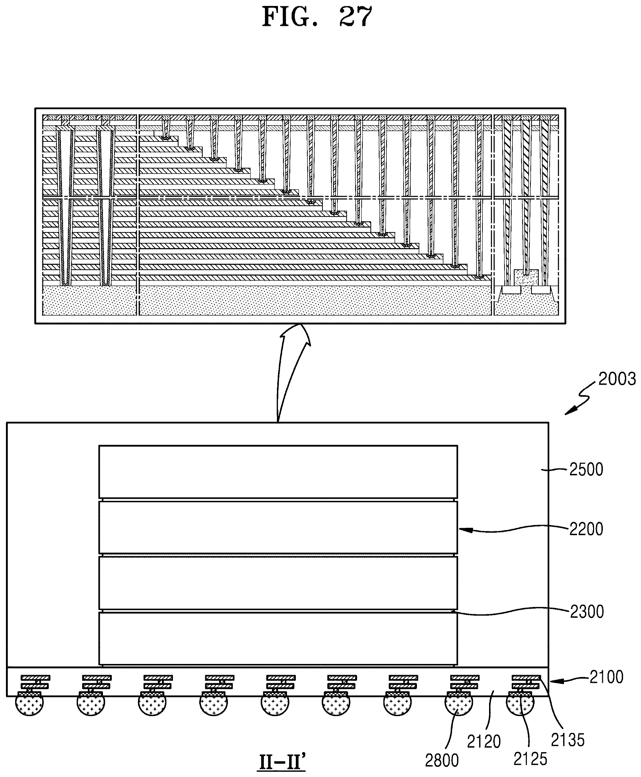

FIG. 27 is a cross-sectional view illustrating a semiconductor package including a semiconductor device according to an embodiment.

Referring to FIG. 27, in the semiconductor package 2003, the package substrate 2100 may be the printed circuit board. The package substrate 2100 may include a package substrate body 2120, the plurality of package upper pads 2130 (see FIG. 26) disposed on an upper surface of the package substrate body 2120, a plurality of lower pads 2125 disposed on or exposed through a lower surface of the package substrate body 2120, and a plurality of internal wirings 2135 electrically connecting the plurality of package upper pads 2130 (see FIG. 26) and the plurality of lower pads 2125 inside the package substrate body 2120. As shown in FIG. 26, the plurality of package upper pads 2130 may be electrically connected to a plurality of connection structures 2400. The plurality of lower pads 2125 may be connected to a plurality of multiple wiring patterns 2005 on a main board 2001 of the electronic system 2000 shown in FIG. 26 through a plurality of conductive bumps 2800. Each of the plurality of semiconductor chips 2200 may include the semiconductor device 10 described with reference to FIG. 6.

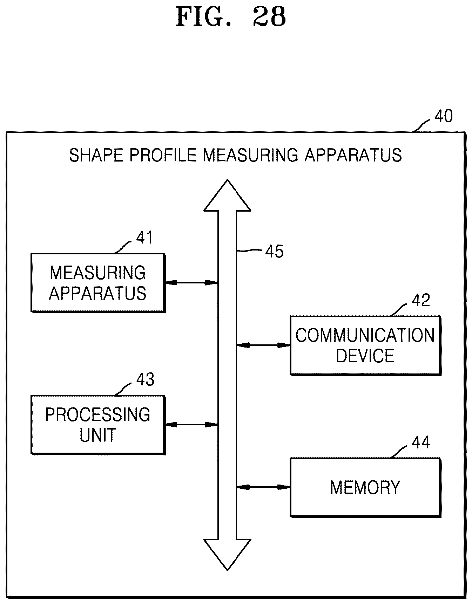

FIG. 28 is a schematic block diagram of a shape profile measuring system according to an embodiment.

Referring to FIG. 28, a shape profile measuring system 40 may include a measuring unit 41, a communication unit 42, an operation processing unit 43, a memory 44, and a bus 45. The shape profile measuring system 40 of FIG. 28 may correspond to the system 1 for inspection the semiconductor device of FIG. 4. However, the components included in the shape profile measuring system 40 are not necessarily limited to those listed above, and the shape profile measuring system 40 may variously include components for measuring a shape profile. Each component of the shape profile measuring system 40 may communicate with one another through the bus 45.

The measuring unit 41 may measure the semiconductor device as a measurement target including structural patterns. For example, the measuring unit 41 may include a device that measures the semiconductor device as a measurement target MT based on an interference signal generated by reflection from the measurement target MT. For example, the measuring unit 41 may include a signal generator that generates and emits an ultrasonic signal in a wavelength band having high transmittance for the semiconductor device as the measurement target. For example, the measuring unit 41 may generate an ultrasonic signal having a vibration frequency of about 1 GHz to about 5 GHz.

The communication unit 42 may provide network communication to the shape profile measuring system 40. The network may be a wired and/or wireless network such as radio, cellular, satellite, or broadcasting. In an embodiment, the shape profile measuring system 40 may be an electronic device installed with an image processing program such as a computer, a smartphone, a personal computer, or a server.

The operation processing unit 43 may perform operations on data obtained by the measuring unit 41. The operation processing unit 43 may measure optical path lengths based on the interference signals.

In some one or more embodiments, the operation processing unit 43 may perform operations on two-dimensional (2D) images obtained by the measuring unit 41. The operation processing unit 43 may measure a planar position of a hole H.

For example, the operation processing unit 43 may include a CPU, a graphics processing unit (GPU), a vector processor, a quantum processing unit, or an embedded processing unit.

The memory 44 may store data processed by the operation processing unit 43. The memory 44 may store data obtained by the measuring unit 41. For example, the memory 44 may include a flash memory, a hard disk drive (HDD), a SSD, a DRAM, or a static random-access memory (SRAM).

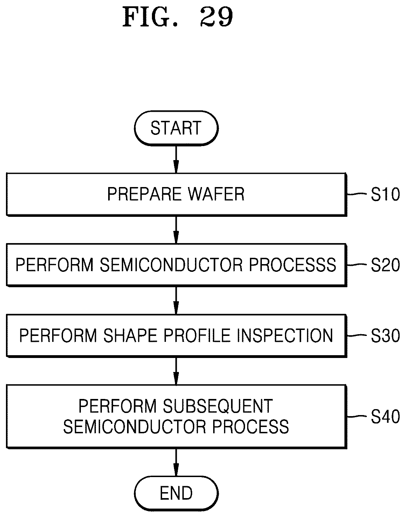

FIG. 29 is a flowchart illustrating a method of manufacturing a semiconductor device including a method of measuring a shape profile according to an embodiment.

Referring to FIG. 29, the wafer W may first be prepared (operation S10). The wafer W may include, for example, a wafer on which one or more semiconductor processes have been performed or a bare wafer on which no semiconductor process has been performed.

Thereafter, a semiconductor process may be performed on the wafer W (operation S20). An oxidation process, a photolithography process, a deposition process, an etching process, an ion implantation process, and/or a cleaning process may be performed on the wafer W. The patterns may be formed on the wafer by semiconductor processes performed thereon. In some one or more embodiments, at least a portion of the wafer W may be removed in the vertical direction (Z direction) to form a pattern extending in the vertical direction (Z direction). In another embodiment, after forming the plurality of layers on the wafer W, at least a portion of the plurality of layers may be removed in the vertical direction (Z direction) to form a pattern extending in the vertical direction (Z direction).

Thereafter, a shape profile inspection may be performed (operation S30). The operation of inspecting the shape profile (operation S30) may correspond to operation S1 of FIG. 1.

Thereafter, a subsequent semiconductor process may be performed on the wafer W (operation S40). The subsequent semiconductor process on the wafer W may include various processes. For example, the subsequent semiconductor process may include an oxidation process, a photolithography process, a deposition process, an etching process, an ion implantation process, and/or a cleaning process. In addition, the subsequent semiconductor process may include a singulation process for separating the wafer W into individual semiconductor chips, a testing process for testing the semiconductor chips, and a packaging process for packaging the semiconductor chips. A semiconductor device may be completed through the subsequent semiconductor process on the wafer W.

Embodiments are set out in the following Clauses:
Clause 1. A method of inspecting semiconductor devices, the method comprising:
   selecting, based on a semiconductor device, a type of a target structure and a type of a target defect to be inspected;
   selecting a filter based on the target structure and the target defect;
   performing an ultrasonic signal simulation based on the target structure;
   selecting, based on the ultrasonic signal simulation, a type of a probe configured to generate an ultrasonic signal by applying a vibration to the semiconductor device;

   setting a frequency of the vibration based on the ultrasonic signal simulation;
   generating the ultrasonic signal by applying, using the tip, the vibration to the semiconductor device;
   measuring the ultrasonic signal;
      processing the measured ultrasonic signal using the selected filter;
      performing a fitting for each of a signal generated by the ultrasonic signal simulation and the processed measured ultrasonic signal;
      determining an accuracy of the fitting;
   wherein, when the determined accuracy does not satisfy a reference value, the method further comprises:
      repeating, based on a reference tool comprising a different filter and a different ultrasonic signal simulation, the performing the fitting and the determining the accuracy of the fitting;
      wherein, when the determined accuracy satisfies the reference value, the method further comprises:
         quantifying one or more measurement values for the target structure and/or the target defect;
         wherein the measuring the ultrasonic signal further comprises:
            measuring a signal based on a vertical stack of the semiconductor device;
            measuring a reference signal; and
            measuring a target structure of the semiconductor device.
Clause 2. The method of Clause 1, wherein the measuring the ultrasonic signal further comprises:
   generating an arbitrary waveform;
   transmitting the generated arbitrary waveform to a signal transmission and reception apparatus included in a system configured to inspect semiconductor devices; and
   switching a type of a signal of the signal transmission and reception apparatus to a pulse or an echo,
   wherein, when the type of the signal is switched to the pulse, the measuring the ultrasonic signal further comprises:
   generating an ultrasonic pulse as the pulse, by a signal transmission portion of the signal transmission and reception apparatus ; and
   transmitting, by the signal transmission portion, the ultrasonic pulse to the semiconductor device,
   wherein information of the echo, which is based on the semiconductor device and received by a signal receiving portion of the signal transmission and reception apparatus , is transmitted to a switch portion of the signal transmission and reception apparatus,
   wherein, when the type of the signal is switched to the echo, the measuring the ultrasonic signal further comprises:
      measuring the echo using an oscilloscope; and
      collecting data measured by the oscilloscope using data acquisition (DAQ).
Clause 3. The method of Clause 2, wherein the measuring the ultrasonic signal further comprises:
   performing a fast Fourier transform (FFT) on the collected data;
   extracting a frequency-dependent signal from the data on which the FFT was performed;
   obtaining an amplitude signal and a phase signal of the extracted frequency-dependent signal;
   measuring an arrival time of the echo, wherein the echo is a reflected signal;
   analyzing a correlation between the pulse and the echo;
   extracting a shape deformation inside the semiconductor device based on the correlation and the amplitude signal and the phase signal of the extracted frequency-dependent signal; and
   determining a structure inside the semiconductor device.
Clause 4. The method of Clause 2 or Clause 3, wherein the system configured to inspect semiconductor devices further comprises a signal generation apparatus configured to perform the ultrasonic signal simulation and measure the ultrasonic signal,
   wherein the switch portion is configured to perform the switching,
   wherein:
      the signal transmission portion comprises a transducer configuring the tip,
      the signal receiving portion comprises a probe,
      the probe including the tip is configured to be replaceable, and
      the transducer is configured to physically vibrate the semiconductor device within a range of about 1 GHz to about 20 GHz and to generate the ultrasonic signal.
Clause 5. The method of Clause 14, wherein the measuring the target structure of the semiconductor device further comprises:
   measuring an error value caused by measurement equipment;
   adjusting a zero point of the measured error value; and
      measuring the semiconductor device after the zero point is adjusted.

While the disclosure has been particularly shown and described with reference to one or more embodiments thereof, it will be understood that various changes in form and details may be made therein without departing from the scope of the following claims.

## Claims

1. A method of inspecting semiconductor devices, the method comprising:
selecting a type of a target structure and a type of a target defect based on a semiconductor device comprising at least one layer (S100);
selecting a filter based on the target structure and the target defect (S150);
performing an ultrasonic signal simulation based on the target structure (S200);
selecting, based on the ultrasonic signal simulation, a type of a probe configured to generate an ultrasonic signal by applying a vibration to the semiconductor device using a tip of the probe;
setting a frequency of the vibration based on the ultrasonic signal simulation;
generating the ultrasonic signal by applying, using the tip, the vibration to the semiconductor device;
measuring the ultrasonic signal (S400);
processing the measured ultrasonic signal using the selected filter (S500);
performing a fitting for each of a signal generated by the ultrasonic signal simulation and the measured ultrasonic signal processed by the selected filter (S600); and
determining an accuracy of the fitting (S700).

2. The method of claim 1, wherein the measuring the ultrasonic signal (S400) further comprises:
measuring a signal based on a vertical stack of the semiconductor device (S400a);
measuring a reference signal (S400b); and
measuring a target structure of the semiconductor device (S400c).

3. The method of claim 2, wherein measuring the target structure of the semiconductor device (S400c) further comprises:
measuring an error value caused by measurement equipment (S400c_11);
adjusting a zero point of the measured error value (S400c_12); and
measuring the semiconductor device after the zero point is adjusted (S400c_13).

4. The method of any preceding claim, wherein measuring the ultrasonic signal (S400) further comprises:
generating an arbitrary waveform (S410);
transmitting the generated arbitrary waveform to a signal transmission and reception apparatus (S411); and
switching a type of a signal of the signal transmission and reception apparatus to a pulse or an echo (S420).

5. The method of claim 4, wherein the measuring the ultrasonic signal further (S400) comprises:
when the type of the signal is switched to the pulse,
generating an ultrasonic pulse as the pulse, by a signal transmission portion of the signal transmission and reception apparatus (S421a); and
transmitting, by the signal transmission portion, the ultrasonic pulse to the semiconductor device (S422a),
wherein information of the echo, which is based on the semiconductor device and received by a signal receiving portion of the signal transmission and reception apparatus, is transmitted to a switch portion of the signal transmission and reception apparatus.

6. The method of claim 5, wherein the measuring the ultrasonic signal (S400) further comprises:
when the type of the signal is switched to the echo:
measuring the echo using an oscilloscope (S421b); and
collecting data measured by the oscilloscope using data acquisition (S422b).

7. The method of claim 6, wherein the measuring the ultrasonic signal (S400) further comprises:
performing a Fast Fourier Transform, FFT, on the collected data (S431b);
extracting a frequency-dependent signal from the data on which the FFT was performed (S432b); and
obtaining an amplitude signal and a phase signal of the extracted frequency-dependent signal (S433b).

8. The method of claim 7, wherein the measuring the ultrasonic signal (S400) further comprises:
measuring an arrival time of the echo (S431a), wherein the echo is a reflected signal;
analyzing a correlation between the pulse and the echo (S432a);
extracting a shape deformation inside the semiconductor device based on the correlation and the amplitude signal and the phase signal of the extracted frequency-dependent signal (S440); and
determining a structure inside the semiconductor device (S450).

9. The method of any of claims 5-8, wherein:
the switch portion is configured to perform the switching;
the signal transmission portion comprises a transducer configuring the probe;
the signal receiving portion comprises a probe; and
the probe including the tip is configured to be replaceable.

10. The method of claim 9, wherein the transducer is configured to physically vibrate the semiconductor device within a range of about 1 GHz to about 20 GHz and to generate the ultrasonic signal.

11. The method of any preceding claim, further comprising:
when the determined accuracy does not satisfy a reference value:
repeating, based on a reference tool comprising a different filter and a different ultrasonic signal simulation, the performing the fitting and the determining the accuracy of the fitting (S800b); and
when the determined accuracy satisfies the reference value:
quantifying one or more measurement values for the target structure and/or the target defect (S800a).

12. The method of any preceding claim, wherein the method is implemented using a system configured to inspect the semiconductor devices, wherein the system comprises a signal generation apparatus configured to perform the ultrasonic signal simulation and measure the ultrasonic signal.

13. A system for inspecting semiconductor devices, the system comprising:
a signal generation apparatus (100) configured to generate an ultrasonic signal for inspecting a semiconductor device;
a signal transmission and reception apparatus (200) including a signal transmission portion configured to transmit a pulse signal, which is an ultrasonic signal delivered from the signal generation apparatus (100), to the semiconductor device, and a signal receiving portion configured to receive an echo signal, which is the ultrasonic signal reflected from the semiconductor device; and
a signal processing apparatus (300) configured to process the signal delivered from the signal transmission and reception apparatus (200),
wherein the signal generation apparatus (100) comprises a position controller (110) configured to control a position of a wafer including the semiconductor device, a waveform generator (120) configured to generate the pulse signal, and a waveform amplifier (130) configured to amplify a waveform of the pulse signal.

14. The system of claim 13 wherein:
the signal transmission and reception apparatus (200) further comprises a switch portion (210) configured to perform switching of the pulse signal and the echo signal;
the signal transmission portion comprises a transducer (222) placed above a tip (221); and
the signal receiving portion includes a probe, configured to be replaceable,
wherein the tip (221) is configured to physically contact the semiconductor device.

15. The system of claim 13 or claim 14 wherein the signal processing apparatus (300) comprises:
a processing-side waveform amplifier (330) configured to amplify a waveform of the echo signal;
an oscilloscope (320) configured to receive and obtain information of the echo signal; and
a data acquisition system (310) configured to collect the information of the echo signal.
